# EUROPEAN PATENT SPECIFICATION

(11) **EP 4 135 405 B1**
(45) Date of publication and mention of the grant of the patent: **26.03.2025**
(21) Application number: 22790193.1
(22) Date of filing: 13.04.2022
(51) Int. Cl.: H04W 36/00, H04W 36/30, H04W 36/14, H04W 36/36, H04L 41/5025, H04L 47/24, H04L 43/062, H04L 43/0829, H04L 43/0852

(54) **CHANNEL SWITCHING METHOD, ELECTRONIC DEVICE AND STORAGE MEDIUM**
KANALUMSCHALTVERFAHREN, ELEKTRONISCHE VORRICHTUNG UND SPEICHERMEDIUM
PROCÉDÉ DE COMMUTATION DE CANAL, ET DISPOSITIF ÉLECTRONIQUE ET SUPPORT DE STOCKAGE

(30) Priority: 16.06.2021 CN 202110666663; 27.09.2021 CN 202111135331
(43) Date of publication of application: 15.02.2023
(73) Proprietor: Honor Device Co., Ltd., Shenzhen, Guangdong 518040 (CN)
(72) Inventor: YANG, Jingqi, Shenzhen, Guangdong 518040 (CN)
(74) Representative: Maiwald GmbH
(86) International application number: PCT/CN2022/086624
(87) International publication number: WO 2022/262398

(56) References cited:
- EP-A1- 1 018 275
- EP-A1- 4 216 501
- WO-A1-2010/080966
- WO-A1-2023/087852
- CN-A- 103 686 899
- CN-A- 108 449 771
- CN-A- 110 798 868
- CN-A- 112 219 423
- CN-A- 112 242 986
- CN-A- 113 795 040
- CN-A- 113 890 905
- CN-A- 114 172 791
- CN-A- 114 286 402
- US-A1- 2011 222 466

## Description

### TECHNICAL FIELD

This application relates to the field of communication technologies, and in particular, to a channel switching method, an electronic device, and a storage medium.

### BACKGROUND

With the rapid development of electronic technologies and Internet technologies, mobile devices such as mobile phones are more widely used in people's daily life. For example, mobile payment and gaming can be performed through mobile phones. To ensure the normal operation of common services (for example, games, calls, and social software), mobile phones of users are usually connected to wireless networks. However, in some scenarios, the current wireless network is not sufficient to meet the needs of the services (for example, a mobile phone signal becomes poor), leading to lag in service operation, which may reduce the user experience.

WO 2010/080966 A1 describes a wireless transmit/receive unit communicating using a data flow that is defined according to flow identification information.

EP 1 018 275 describes selectable packet-switched and circuit-switched services in a mobile communications network.

### SUMMARY

This application provides a channel switching method, an electronic device, and a storage medium, which can reduce the lag in service operation and improve the user experience.

The present invention is defined by the subject-matter of the independent claims. Additional features of the invention are presented in the dependent claims.

According to a first aspect, an embodiment of this application provides a channel switching method, applied to an electronic device, where the electronic device includes a first network channel and a second network channel, and the method includes: starting a first network application, where the first network application includes a first data flow, a second data flow and a third data flow, and the first data flow, the second data flow and the third data flow are carried on the first network channel; and switching the network channel carrying the first data flow and the second data flow to the second network channel in a case of detecting that network quality of the first data flow does not meet a preset condition and keeping the third data flow carried on the first network channel unchanged. In this method, when it is detected that the network quality of the first data flow does not meet the preset condition, not only the network channel carrying the first data flow is switched to the second network channel, but also the network channel carrying the second data flow is switched to the second network channel, while a third data flow, comprised in a first network application is kept unchanged on the first network channel, which not only resolves the lag in service operation that may be caused by poor network quality of the first data flow, but also resolves the lag in service operation that may be caused by poor network quality of the second data flow, thereby reducing the lag in service operation and improving the user experience.

In a possible implementation, the first data flow and the second data flow are data flows that are sensitive to a same parameter, and the parameter includes at least one of the following parameters: a delay, a packet loss rate, a rate, or a bandwidth. In this method, the first data flow and the second data flow are sensitive to the same parameter, so that the second data flow that is sensitive to the same parameter as the first data flow is switched to the second network channel together.

In a possible implementation, the detecting that network quality of the first data flow does not meet a preset condition includes: detecting, according to the parameter to which the first data flow is sensitive, that the network quality of the first data flow does not meet the preset condition.

In a possible implementation, detecting, the detecting, according to the parameter to which the first data flow is sensitive, that the network quality of the first data flow does not meet the preset condition includes: obtaining a packet of the first data flow from packets carried on the first network channel; calculating the parameter to which the first data flow is sensitive according to the obtained packet; and determining that the calculated parameter does not meet the preset condition corresponding to the parameter.

In a possible implementation, the obtaining a packet of the first data flow from packets carried on the first network channel includes: obtaining the packets carried on the first network channel; determining that identification information of the first application exists in the packets; and determining that the packets include a preset matching feature of the first data flow.

In a possible implementation, before the switching the network channel carrying the first data flow and the second data flow to the second network channel, the method further includes: obtaining network channels in an available state in the electronic device except the first network channel in a case of detecting an environment change; respectively performing quality assessment on the network channels in the available state; selecting the second network channel with the best quality as an alternate network channel according to an assessment result of the quality assessment; and enabling the alternate network channel.

In a possible implementation, the switching the network channel carrying the first data flow and the second data flow to the second network channel includes: switching, in a case of determining that there is a second network channel that is enabled and used as the alternate network channel, the network channel carrying the first data flow and the second data flow to the second network channel.

In a possible implementation, the switching the network channel carrying the first data flow and the second data flow to the second network channel further includes: obtaining network channels in the available state in the electronic device except the first network channel in a case of determining that there is no enabled alternate network channel; respectively performing quality assessment on the network channels in the available state; selecting the second network channel with the best quality as an alternate network channel according to an assessment result of the quality assessment; enabling the second network channel used as the alternate network channel; and switching the network channel carrying the first data flow and the second data flow to the second network channel.

In a possible implementation, before the detecting that network quality of the first data flow does not meet a preset condition, the method further includes: determining that the first application is an application in a preset whitelist.

In a possible implementation, the first network channel is a Wi-Fi channel or a cellular channel, and the second network channel is a Wi-Fi channel or a cellular channel.

In a possible implementation, the first application is a game application, the first data flow is a voice flow, and the second data flow is a battle flow; or the first application is a video playback application, the first data flow is a voice flow, and the second data flow is a video flow.

According to a second aspect, an embodiment of this application provides an electronic device, including:

a processor; and a memory, where the memory is configured to store computer program code, the computer program code includes instructions, the electronic device has a plurality of network channels, the electronic device includes a first network channel and a second network channel, and the electronic device, when reading the instructions from the memory, performs the method according to any one of the first aspect.

According to a third aspect, an embodiment of this application provides a computer-readable storage medium, where the computer-readable storage medium stores a computer program, and the computer program, when run on a computer, causes the computer to perform the method according to any one of the first aspect.

According to a fourth aspect, an embodiment of this application provides a computer program, where the computer program is, when executed by a computer, configured to perform the method according to any one of the first aspect.

In a possible design, the program in the fourth aspect may be stored in whole or in part on a storage medium packaged with a processor, or may be stored in whole or in part on a memory not packaged with the processor.

### BRIEF DESCRIPTION OF DRAWINGS

To describe the technical solutions in the embodiments of the present invention more clearly, the accompanying drawings required for describing the embodiments are briefly described hereinafter. Apparently, the accompanying drawings in the following descriptions show merely some embodiments of the present invention, and a person of ordinary skill in the art may obtain other accompanying drawings according to these accompanying drawings without creative efforts.
FIG. 1 is a schematic diagram of flow switching in the related art;
FIG. 2 is a schematic diagram of flow switching according to an embodiment of this application;
FIG. 3a is a schematic diagram of display of a mobile phone desktop according to an embodiment of this application;
FIG. 3b is a schematic diagram of an application interface according to an embodiment of this application;
FIG. 3c is a schematic diagram of an application interface of a mobile phone using a primary network channel according to an embodiment of this application;
FIG. 3d is a schematic diagram of an application interface of a mobile phone using an alternate network channel according to an embodiment of this application;
FIG. 4 is a schematic diagram of a hardware structure of an electronic device according to an embodiment of this application;
FIG. 5 is a schematic diagram of a software architecture of an electronic device according to an embodiment of this application;
FIG. 6 is a schematic diagram of another software architecture of an electronic device according to an embodiment of this application;
FIG. 7 is a schematic flowchart of an embodiment of a channel switching method according to this application;
FIG. 8 is a schematic structural diagram of heartbeat flow packets according to an embodiment of this application;
FIG. 9 is a schematic diagram of counting packets of a battle flow according to an embodiment of this application;
FIG. 10 is a schematic structural diagram of battle flow packets according to an embodiment of this application;
FIG. 11a to FIG. 11c are schematic diagrams of flow switching according to an embodiment of this application;
FIG. 12 is a sequence diagram of interaction between components of an electronic device according to an embodiment of this application;
FIG. 13 is another sequence diagram of interaction between components of an electronic device according to an embodiment of this application;
FIG. 14a and FIG. 14b are another sequence diagram of interaction between components of an electronic device according to an embodiment of this application;
FIG. 15 is a schematic diagram of an implementation principle of a traffic reporting component according to an embodiment of this application;
FIG. 16a is a schematic diagram of heartbeat flow packets with an interval of 1s according to an embodiment of this application;
FIG. 16b is a schematic diagram of a method for calculating a round-trip time of a heartbeat flow packet;
FIG. 17a is a schematic diagram of code implementation of a registration hook function according to an embodiment of this application;
FIG. 17b is a schematic diagram of code implementation of a registration hook function according to an embodiment of this application;
FIG. 18 is a schematic diagram of code implementation of a matching feature according to an embodiment of this application;
FIG. 19 is a schematic diagram of code implementation of packet filtering according to an embodiment of this application;
FIG. 20 is a schematic diagram of code implementation for sending a target flow and a network quality assessment result of the target flow according to an embodiment of this application; and
FIG. 21 is a schematic diagram of code implementation for obtaining a to-be-switched flow according to an embodiment of this application.

### DESCRIPTION OF EMBODIMENTS

The technical solutions in the embodiments of this application are described below with reference to the accompanying drawings in the embodiments of this application. In the descriptions of the embodiments of this application, "/" means "or" unless otherwise specified. For example, A/B may represent A or B. "And/or" used herein describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the quantity of indicated technical features. Therefore, a feature defined by "first" or "second" can explicitly or implicitly includes one or more features. In the description of the embodiments of this application, unless otherwise stated, "a plurality of" means two or more.

First, the terms involved in the embodiments of this application are described in an exemplary rather than a limiting manner.

A Wi-Fi network card is an apparatus that supports accessing the Internet through a wireless local area network (Wireless Local Area Network, WLAN).

A data service network card is an apparatus that supports accessing the Internet through mobile communication technologies such as general packet radio service (General Packet Radio Service, GPRS), enhanced data rate for GSM evolution (Enhanced Data Rate for GSM Evolution, EDGE), time division-synchronous code division multiple access (Time Division-Synchronous Code Division Multiple Access, TD-SCDMA), high speed downlink packet access (High Speed Downlink Packet Access, HSDPA), wideband code division multiple access (Wideband Code Division Multiple Access, WCDMA), long term evolution (Long Term Evolution, LTE), and the 5th generation mobile communication technology (5th Generation Mobile Communication Technology, 5G).

A network channel is any route between two or more nodes in a network, or a route from a source address to a destination address in a network.

A network channel of an electronic device in the embodiments of this application refers to a route established between an apparatus using the foregoing Wi-Fi network card or data service network card, etc. to access the Internet and another electronic device such as a server. In the embodiments of this application, a network channel established by using a Wi-Fi network card is referred to as a Wi-Fi channel, and a network channel established by using a data service network card is referred to as a cellular channel.

A plurality of network channels may be pre-configured in the electronic device. For example, the plurality of network channels may include a primary Wi-Fi channel, a secondary Wi-Fi channel, a primary cellular channel, and a secondary cellular channel. The primary Wi-Fi channel and the secondary Wi-Fi channel may work in a 2.4 GHz frequency band or a 5 GHz frequency band. For example, if the primary Wi-Fi channel works in the 2.4 GHz frequency band, the secondary Wi-Fi channel works in the 5 GHz frequency band; and if the primary Wi-Fi channel works in the 5 GHz band, the secondary Wi-Fi channel works in the 2.4 GHz band. In addition, the primary cellular channel and the secondary cellular channel may correspond to operator networks. For example, the primary cellular channel may use a SIM card 1 (the SIM card 1 belongs to an operator A), and the secondary cellular channel may use a SIM card 2 (the SIM card 2 belongs to an operator B). Generally, the priority of the primary Wi-Fi channel is higher than those of the other three channels. Therefore, the primary network channel is usually the primary Wi-Fi channel. Generally, considering the data traffic consumption of the electronic device, the priority of the Wi-Fi channel is higher than that of the cellular channel. It may be understood that, the pre-configured channels are only exemplary descriptions, and do not constitute a limitation on the embodiments of this application. In some embodiments, more or fewer channels may be further included. In addition, using the primary Wi-Fi channel as the primary network channel is only a preferred solution, and does not constitute a limitation on the embodiments of this application. In some embodiments, other network channels may be alternatively selected as primary network channels.

With the rapid development of electronic technologies and Internet technologies, mobile devices such as mobile phones are more widely used in people's daily life. For example, mobile payment and gaming can be performed through mobile phones. To ensure the normal operation of common services (for example, games, calls, and social software), mobile phones of users are usually connected to wireless networks. However, in some scenarios, the current wireless network is not sufficient to meet the needs of the services (for example, a mobile phone signal becomes poor), leading to lag in service operation, which may reduce the user experience.

To resolve the foregoing problem, the electronic device may open an acceleration channel to meet the needs of the service. The acceleration channel may be an alternate network channel.

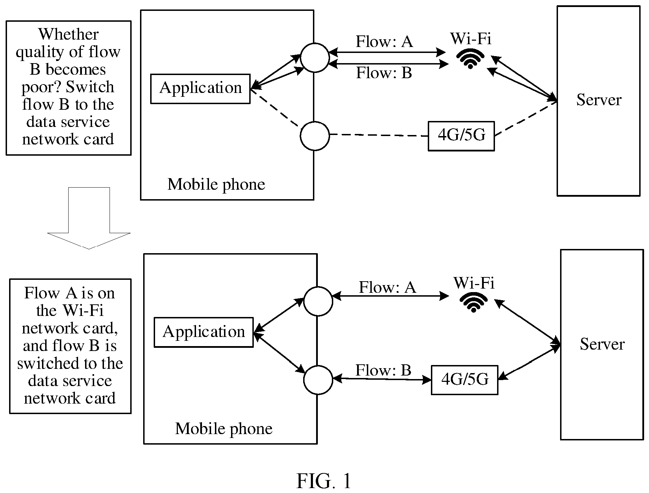

An embodiment of this application provides a channel switching method, to monitor network quality of each flow of a currently running application, and switch, when network quality of a flow becomes poor, the flow to an alternate network channel for transmission, thereby improving the network quality of the flow. For example, as shown in FIG. 1, a first device being a mobile phone is taken as an example. An application of the mobile phone includes flow A and flow B. Both flow A and flow B are transmitted on the Wi-Fi channel at the beginning, and there is no flow for the application on the cellular channel. When the network quality of flow B becomes poor, the mobile phone switches flow B to the cellular channel for transmission. After switching, flow A is transmitted on the Wi-Fi channel and flow B is transmitted on the cellular channel. The method improves the network quality of the flow by switching the flow whose network quality becomes poor to the alternate network channel, reduces the lag in service caused by the poor network quality of the flow, and improves the user experience.

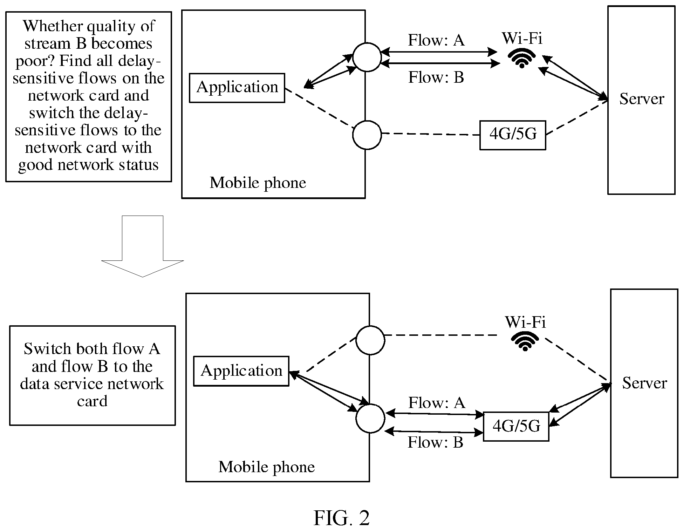

An embodiment of this application further provides another channel switching method. When the application has at least two flows carried on the same network channel, if network quality of one flow becomes poor, the plurality of flows including this flow on the same network channel may be switched to an alternate network channel, so that a network quality assessment result of a single flow can be applied to the plurality of flows including the single flow, and network channel switching of the plurality of flows can be implemented, thereby reducing the possibility of lag in services of the application and improving the user experience. FIG. 2 is a schematic diagram of channel switching for flows of a current application in an embodiment of this application. In FIG. 2, flow A and flow B being delay-sensitive flows of the application is taken as an example. flow A and flow B are initially transmitted on a Wi-Fi channel. If it is detected that quality of flow B becomes poor (for example, it is calculated that a network delay status of flow B becomes poor), flow A and flow B on the same Wi-Fi channel are switched to a cellular channel, so that a network quality assessment result of flow B is applied to flow A and flow B on the same network channel. The fast sensing of the network quality of flow B guarantees fast sensing of network quality of all flows of the same type (for example, delay-sensitive flows) on the same network channel and fast switching of network channels.

An application usually includes a plurality of flows. Due to different transmission characteristics of different flows, it is difficult to monitor whether network quality of some flows becomes poor. Therefore, even if the electronic device monitors the network quality of all flows of the application in real time, all flows whose network quality becomes poor may not be monitored in time. In this embodiment of this application, when the network quality of a single flow becomes poor, the plurality of flows including the flow on the same network channel are switched to the alternate network channel. The plurality of flows may include the flows whose poor network quality cannot be monitored in time. Therefore, the lag in service operation caused by the flows whose poor network quality cannot be monitored in time can be resolved. Still taking the foregoing FIG. 2 as an example, flow A and flow B are transmitted on the Wi-Fi channel. If there is a problem with the transmission of the Wi-Fi channel, leading to poor network quality of flow A and flow B and lag in service operation of the application, but the mobile phone only monitors the deterioration of the network quality of flow B in time and fails to monitor the deterioration of the network quality of flow A in time, flow A and flow B are switched to an alternate network channel (for example, a cellular channel), which resolves the lag in service operation caused by the deterioration of the network quality of flow B, and resolves the lag in service operation caused by the deterioration of the network quality of flow A, thereby reducing the lag in service operation and improving the user experience.

It should be noted that, in this embodiment of this application, when the currently running application has n (n is a natural number greater than 1) flows carried on the same network channel, if the network quality of one of the flows becomes poor, the n flows or all flows may be switched to the alternate network channel, which is not limited in this embodiment of this application.

The implementation of the foregoing another channel switching method provided in this embodiment of this application is described in detail below. It should be noted that, for the implementation of the foregoing channel switching method provided in this embodiment of this application, reference may be made to the following description, and the main difference is that only a flow whose quality becomes poor is switched during flow switching.

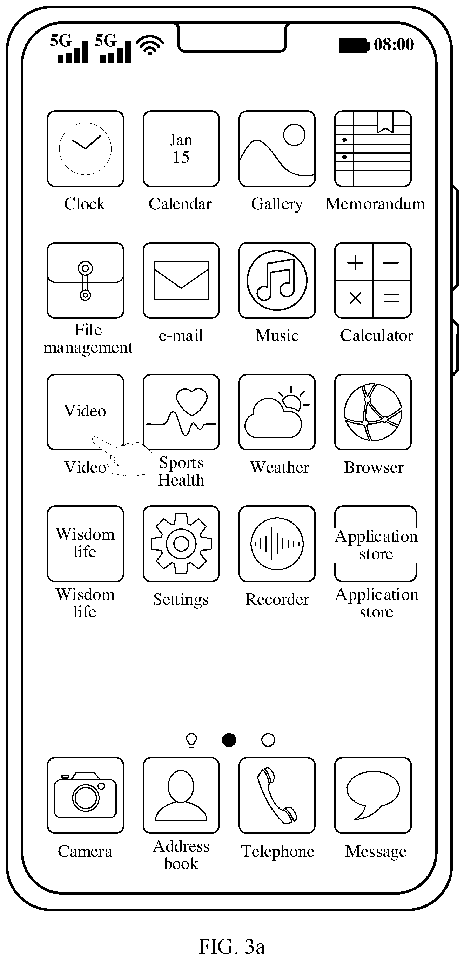

An applicable scenario of the another channel switching method provided in this embodiment of this application is illustrated by using FIG. 3a to FIG. 3d.

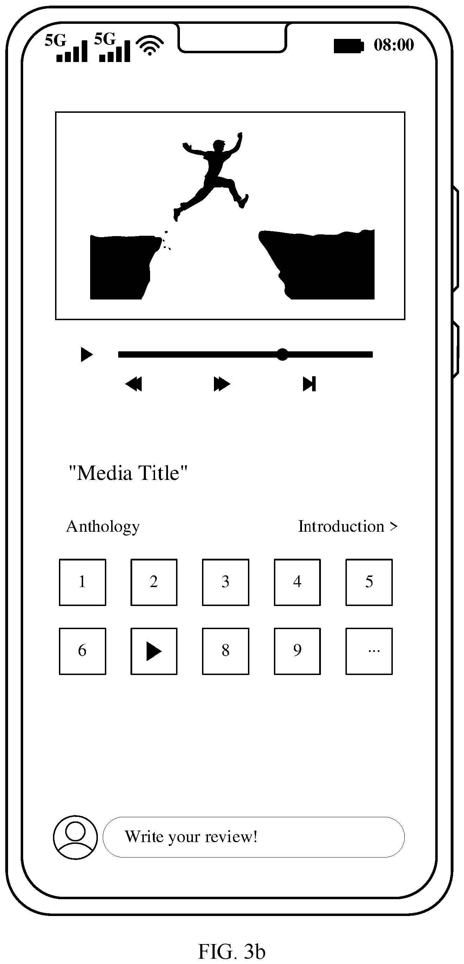

The first device being a mobile phone is taken as an example. FIG. 3a is a schematic diagram of a mobile phone desktop. As shown in FIG. 3a, the user may click a video application icon on the mobile phone desktop to open a video application, thereby obtaining a schematic diagram of video display as shown in FIG. 3b.

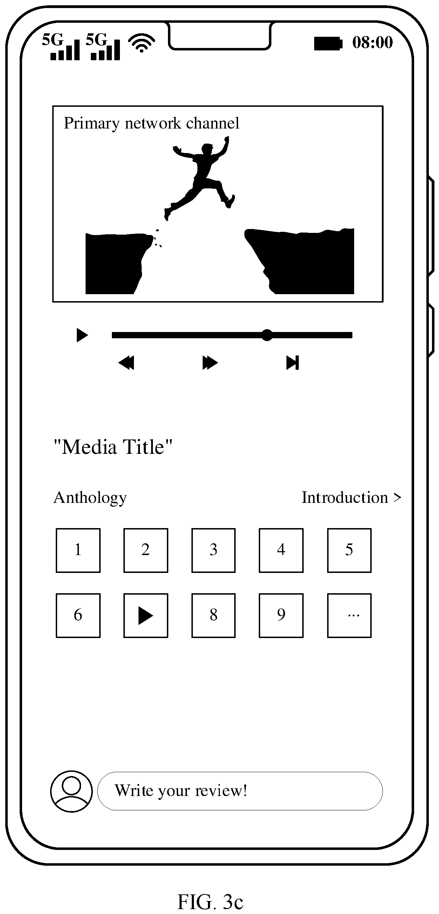

FIG. 3c is a schematic diagram of an effect after the mobile phone uses a primary network channel (for example, a Wi-Fi channel). As shown in FIG. 3c, after the mobile phone obtains a path of the primary network channel, the primary network channel may be used for video viewing.

It may be understood that, a current network application (for example, the video application in FIG. 3c) may include a plurality of flows (for example, video flows and audio flows), and the plurality of flows may be carried on the primary network channel.

Referring to FIG. 2, if quality of one flow (for example, a video flow) of the plurality of flows (for example, video flows and audio flows) becomes poor, the plurality of flows are switched to an alternate network channel.

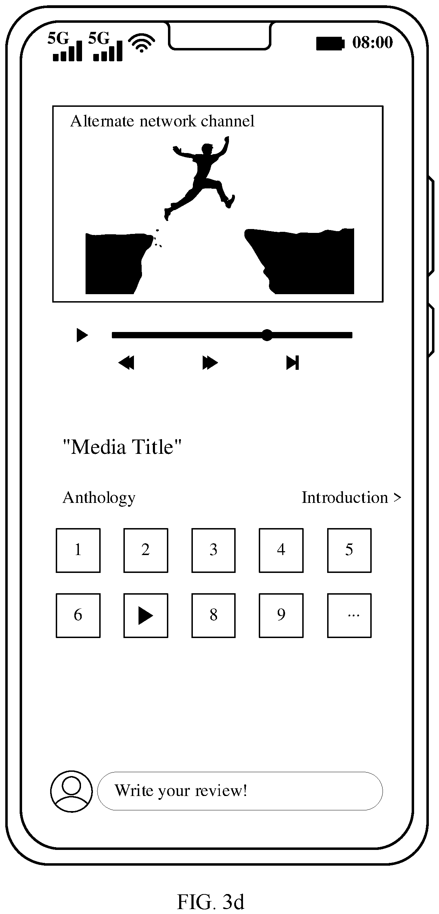

FIG. 3d is a schematic diagram of the mobile phone using the alternate network channel (for example, a cellular channel). As shown in FIG. 3d, when receives a channel switching instruction, the mobile phone may switch voice flows and video flows from the current primary network channel to the alternate network channel, and may use the alternate network channel for video viewing, to avoid video freezing.

The channel switching method in the embodiments of this application may be applied to the first device. The first device may be a mobile terminal, a terminal device, user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The first device may be a station (ST) in a WLAN, may be a cellular phone, a cordless phone, a session initiation protocol (SIP) phone, a wireless local loop (WLL) station, a personal digital assistant (PDA) device, a handheld device having a wireless communication function, a computing device, another processing device connected to a wireless modem, an in-vehicle device, an Internet of Vehicles terminal, a computer, a laptop computer, a handheld communication device, a handheld computing device, a satellite wireless device, a wireless modem card, a TV set top box (Set Top Box, STB), customer premise equipment (Customer Premise Equipment, CPE), and/or other devices for communicating over wireless systems and next-generation communication systems, for example, a mobile terminal in the 5G network, or a mobile terminal in a future evolved public land mobile network (PLMN). The first device 10 may also be a wearable device. The wearable device may also be referred to as a wearable smart device, and is a collective term for wearable devices developed by intelligently designing everyday wearables based on a wearable technology, for example, glasses, gloves, a watch, clothing, and shoes. The wearable device is a portable device that is directly worn on a human body or integrated into a user's clothing or accessory. A wearable device is more than a hardware device, and can even achieve powerful functions through software support, data exchange, and cloud interaction. In a broad sense, the smart wearable device includes, for example, smartwatches or smart glasses that have full functions and large sizes and that can perform some or all functions without relying on a smartphone, and various smart bands, or smart jewelries that focus only on a specific type of application function and need to be used in cooperation with another device such as a smartphone and that monitor physical signs.

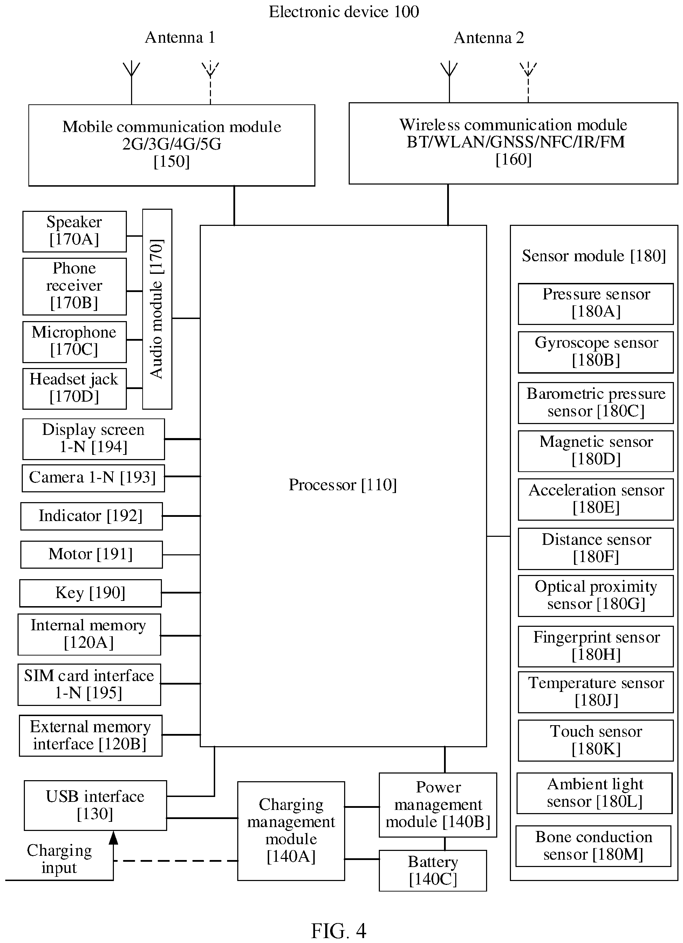

First, an exemplary electronic device provided in the following embodiment of this application is described below. FIG. 4 is a schematic structural diagram of the electronic device 100. The electronic device 100 may be the foregoing first device.

The electronic device 100 may include a processor 110, an external memory interface 120B, an internal memory 120A, a universal serial bus (universal serial bus, USB) interface 130, a charging management module 140A, a power management unit 140B, a battery 140C, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the schematic structure in this embodiment of this application constitutes no specific limitation on the electronic device 100. In some other embodiments of this application, the electronic device 100 may include more or fewer components than those shown in the figure, or some components may be combined, or some components may be split, or components are arranged in different manners. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the electronic device 100. The controller may generate an operation control signal based on an instruction operation code and a timing signal, and read an instruction and control execution of the instruction.

A memory may be further configured in the processor 110, to store an instruction and data. In some embodiments, the memory in the processor 110 is a cache. The memory may store an instruction or data that has just been used or cyclically used by the processor 110. If the processor 110 needs to use the instruction or the data again, the processor may directly invoke the instruction or the data from the memory, to avoid repeated access and reduce a waiting time of the processor 110, thereby improving system efficiency.

The execution of the channel switching method provided in the embodiments of this application may be completed by the processor 110 by controlling or calling other components, such as calling a processing program of the embodiments of this application stored in the internal memory 120A, to implement the channel switching operation of the user and improve the user experience.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be used for data transmission between the electronic device 100 and a peripheral device, or may be configured to connect to a headset, to play audio by using the headset. The interface may alternatively be configured to connect to another electronic device such as an AR device.

It may be understood that a schematic interface connection relationship between the modules in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit or receive an electromagnetic wave signal. Each antenna of the electronic device 100 may be configured to cover one or more communication frequency bands. Different antennas may also be multiplexed to improve utilization of the antennas. For example, the antenna 1 may be multiplexed as a diversity antenna of the wireless local area network. In some other embodiments, the antenna may be used in combination with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Next, the demodulator transmits the demodulated low-frequency baseband signal to the baseband processor for processing. The low-frequency baseband signal is processed by the baseband processor and then transmitted to an application processor. The application processor outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and the modem processor and the mobile communication module 150 or another functional module may be disposed in the same component.

The wireless communication module 160 may provide a solution to wireless communication applied to the electronic device 100, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may alternatively receive a to-be-sent signal from the processor 110, perform frequency modulation and amplification on the to-be-sent signal, and convert the signal into an electromagnetic wave for radiation by using the antenna 2.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), and a Beidou navigation satellite system (Beidou navigation satellite system, BDS), a quasi-zenith satellite system (quasi-zenith satellite system, QZSS) and/or a satellite based augmentation system (satellite based augmentation system, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured to render graphics. The processor 110 may include one or more GPUs, and execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include one or N display screens 194, and N is a positive integer greater than 1.

The electronic device 100 can implement a photographing function by using the ISP, the camera 193, the video codec, the GPU, the display screen 194, the application processor, and the like.

The ISP is configured to process data fed back by the camera 193. For example, during photographing, a shutter is enabled. Light is transferred to a photosensitive element of the camera through a lens, and an optical signal is converted into an electrical signal. The photosensitive element of the camera transfers the electrical signal to the ISP for processing, and therefore, the electrical signal is converted into an image visible to a naked eye. The ISP may also perform algorithm optimization on image noise point, brightness, and skin tone. The ISP may also optimize parameters of a photographing scene such as the exposure and the color temperature. In some embodiments, the ISP may be arranged in the camera 193.

The camera 193 is configured to capture still images or videos. An object is projected onto the photosensitive element through an optical image generated by the lens. The light-sensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP, for the ISP to convert the electrical signal into a digital image signal. The ISP outputs the digital image signal to the DSP for processing. The DSP converts the digital image signal into an image signal in the formats of such as standard RGB and YUV. In some embodiments, the electronic device 100 may include one or N cameras 193, where N is a positive integer greater than 1.

The digital signal processor is configured to process a digital signal, and may further process another digital signal in addition to a digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, a transmission mode between neurons in a human brain, and may further continuously perform self-learning. The NPU may be used to implement an application such as intelligent cognition of the electronic device 100, for example, image recognition, facial recognition, voice recognition, and text understanding.

The external memory interface 120B may be configured to connect to an external storage card such as a micro SD card, to expand a storage capability of the electronic device 100. The external storage card communicates with the processor 110 by using the external memory interface 120B, so as to implement a data storage function, such as storing a file such as music or a video in the external storage card.

The internal memory 120A may be configured to store computer executable program code, and the executable program code includes instructions. The internal memory 120A may include a program storage region and a data storage region. The program storage area may store an operating system, an application required by at least one function (for example, a sound playback function and an image display function), and the like. The data storage region may store data (for example, audio data and an address book) and the like created when the electronic device 100 is used. In addition, the internal memory 120A may include a high-speed random access memory, or may include a non-volatile memory such as at least one magnetic disk memory, a flash memory, or a universal flash storage (universal flash storage, UFS). The processor 110 runs the instructions stored in the internal memory 120A and/or the instructions stored in the memory disposed in the processor, to implement various functional applications and data processing of the electronic device 100.

The electronic device 100 may implement an audio function by using the audio module 170, the speaker 170A, the phone receiver 170B, the microphone 170C, the headset jack 170D, the application processor, and the like. The audio function is, for example, music playing or recording.

The touch sensor 180K is also referred to as a "touch panel". The touch sensor 180K may be disposed on the display screen 194. The touch sensor 180K and the display screen 194 form a touch screen, which is also referred to as a "touchscreen". The touch sensor 180K is configured to detect a touch operation performed on or near the touch sensor 180K. The touch sensor may transmit the detected touch operation to the application processor, to determine a touch event type. The touch sensor may provide a visual output related to the touch operation by using the display screen 194. In some other embodiments, the touch sensor 180K may be alternatively disposed on a surface of the electronic device 100, and is located on a position different from that of the display screen 194.

In this embodiment of this application, touch screen data of the user can be obtained through the touch sensor 180K, and the touch screen data may be sent to the processor 110 for processing.

The key 190 includes a power key, a volume key, and the like. The key 190 may be a mechanical key, or may be a touch key. The electronic device 100 may receive a key input, and generate a key signal input related to user setting and function control of the electronic device 100.

The motor 191 may generate a vibration prompt. The motor 191 may be configured to provide a vibration prompt for an incoming call, and may be further configured to provide touch vibration feedback. For example, touch operations performed on different applications (for example, photo taking and audio playing) may correspond to different vibration feedback effects. For touch operations performed on different regions of the display screen 194, the motor 191 may also correspond to different vibration feedback effects. Different application scenarios (for example, a time prompt, information receiving, an alarm clock, and a game) may also correspond to different vibration feedback effects. A touch vibration feedback effect may be further customized.

The indicator 192 may be an indicator light, and may be configured to indicate a charging state or a battery change, or may be further configured to indicate a message, a missed call, a notification, or the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces. N is a positive integer greater than 1. The SIM card interface 195 may support a Nano SIM card, a Micro SIM card, a SIM card, or the like. A plurality of cards can be inserted into the same SIM card interface 195 together. The plurality of cards may be of the same type or different types. The SIM card interface 195 is also compatible with different types of SIM cards. The SIM card interface 195 is also compatible with external memory cards. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

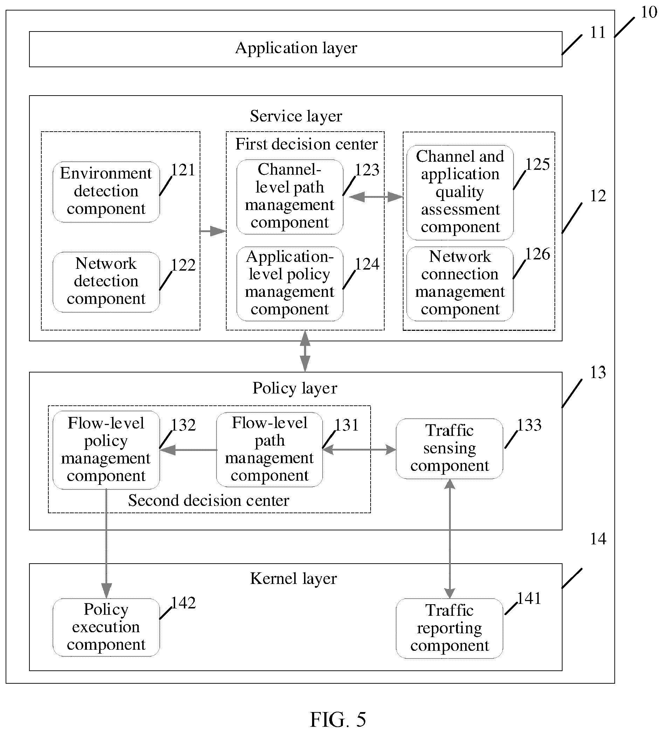

A system framework diagram of the foregoing first device is described below. As shown in FIG. 5, the first device 10 includes an application layer 11, a service layer 12, a policy layer 13, and a kernel layer 14.

The application layer 11 may be used to provide various network applications, and the network applications may be third-party applications or system applications, for example, network applications such as games, music, and videos. The types of network applications provided by the application layer 11 are not limited in this application. The network application herein refers to an application that needs to use a network channel of the first device 10 to obtain resources from the network.

The service layer 12 may include an environment detection component 121, a network detection component 122, a channel-level path management component 123, an application-level policy management component 124, and a channel and application quality assessment component 125. The environment detection component 121 may be configured to detect a state of an application. For example, the state of the application may include states such as application exit, application opening, application running, application installation, and application unloading. It may be understood that the states are only exemplary descriptions, and may further include more states. Details are not described herein again. The network detection component 122 may be configured to detect an open state of a network channel. The channel-level path management component 123 may be configured to request/close a network channel, sense a state change of a network channel, update a network channel selection policy, and store paths of a plurality of network channels. The application-level policy management component 124 may generate different execution policies based on input information. For example, the policy may be to enable an acceleration function of a network channel, enable traffic sensing (for example, detect the traffic of the network channel), or the like. The channel and application quality assessment component 125 may be configured to assess quality of a network channel. The service layer 12 may further include: a network connection management component 126, configured to enable a network channel, that is, convert the network channel from a sleep state to an awake state, in which the network channel can be directly used.

The policy layer 13 may include a flow-level path management component 131, a flow-level policy management component 132, and a traffic sensing component 133. The flow-level path management component 131 may be configured to update selection of a network channel according to a policy change of an upper layer, trigger quality detection of a network channel, dynamically select the optimal channel, and store paths of different network channels, for example, store a path of a network channel (for example, a primary network channel) currently used by the application and a path of an alternate network channel. The flow-level policy management component 132 may be configured to instruct the switching of network channels, and may be further configured to store a network channel switching policy of flows in a network application. The traffic sensing component 133 may be configured to collect statistics on the reported traffic and assess network quality of each flow.

The kernel layer 14 may include a traffic reporting component 141 and a policy execution component 142. The traffic reporting component 141 may be configured to collect and report traffic information. The policy execution component 142 may be configured to perform switching of network channels.

It may be understood that an interface connection relationship between the components illustrated in this embodiment of this application is merely an example for description, and does not constitute a limitation on a structure of the first device. In some other embodiments of this application, the first device may alternatively use an interface connection manner different from that in the foregoing embodiment, or use a combination of a plurality of interface connection manners.

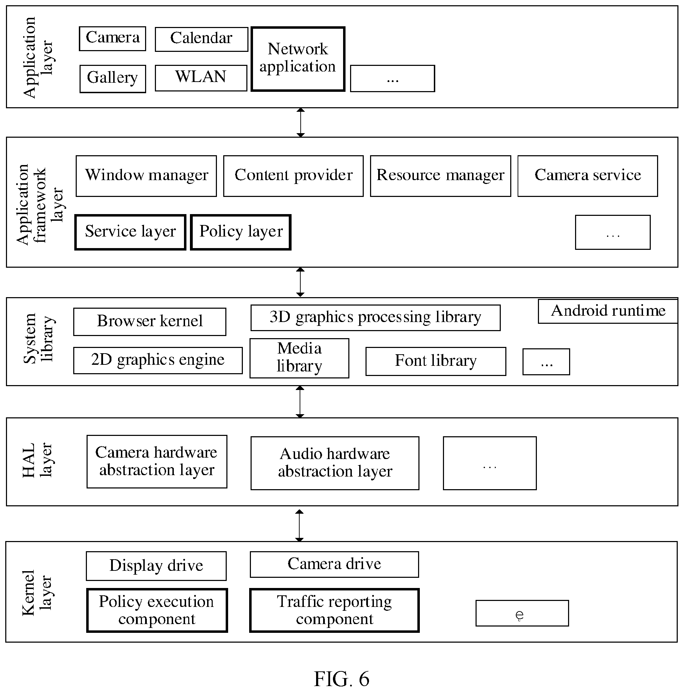

The system framework shown in FIG. 5 is only used for illustrating the implementation of the layered architecture of the first device. The system architecture shown in FIG. 5 may also be implemented as part of an existing layered software architecture. Taking an Android system as an example, FIG. 6 is a block diagram of a software structure of an electronic device of an Android system according to an embodiment of this application. In a layered architecture, software is divided into several layers, and each layer has a clear role and task. Layers communicate with each other through a software interface. In the embodiment shown in FIG. 6 of this application, the Android system is divided into five layers, which include an application layer, an application framework layer (or referred to as a system framework layer), a system library and Android runtime layer, a hardware abstraction layer (hardware abstraction layer, HAL), and a kernel layer from top to bottom.

The application layer includes several application programs (referred to as applications below), such as camera, gallery, calendar, and WLAN. In a possible example, the application layer in the system architecture shown in FIG. 5 may correspond to the application layer. The application layer of the electronic device shown in FIG. 6 may include network applications described in the embodiments of this application, such as a video playback application and a game application.

The application framework layer provides an application programming interface (Application Programming interface, API) and a programming framework for the applications at the application layer. The application framework layer further includes some predefined functions. For example, the application framework layer may include a window manager, a content provider, a resource manager, a camera service, and the like. In a possible example, the service layer and the policy layer in the system architecture shown in FIG. 5 may be located at the application framework layer.

The system library and Android runtime layer includes a system library and Android runtime (Android Runtime). The system library may include a plurality of function modules, for example, a surface manager, a 2D graphics engine, a 3D graphics processing library (for example, OpenGL ES), a media library, and a font library.

The HAL is an interface layer between an operating system kernel and a hardware circuit. The HAL includes, but is not limited to, an audio HAL (Audio HAL) and a camera HAL (Camera HAL).

The kernel layer is a layer between hardware and software. The kernel layer may include a display drive, a camera drive, an audio drive, a sensor drive, and the like. In a possible example, the kernel layer in the system architecture shown in FIG. 5 may correspond to the kernel layer in the software architecture shown in FIG. 6. In this case, as shown in FIG. 6, the kernel layer may include: a traffic reporting component and a policy execution component.

The channel switching method according to the embodiments of this application is exemplarily described below with reference to the first device shown in FIG. 4 to FIG. 6.

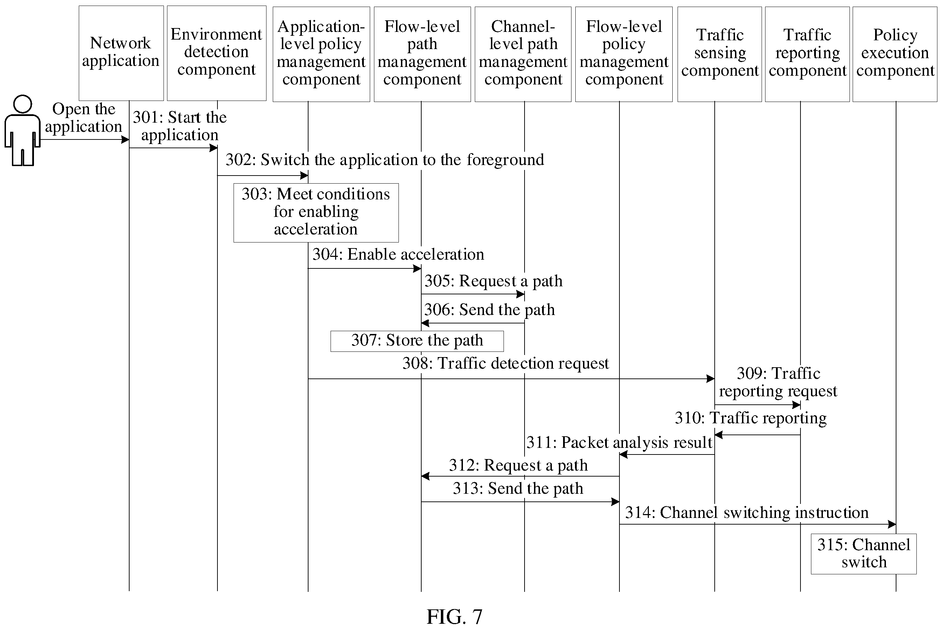

FIG. 7 is a schematic flowchart of an embodiment of a channel switching method according to an embodiment of this application. The method includes:
Step 301: Start a network application in response to a user operation.

Specifically, the user may perform an opening operation in the electronic device 100 to open a network application. For example, the user may click on an icon of the network application in the electronic device 100. In response to the user operation, an application layer 11 in the electronic device 100 starts the network application. It may be understood that the foregoing example only illustrate the scenario of starting the network application by clicking, and does not constitute a limitation on the embodiments of this application. In some embodiments, the network application may be alternatively started through other operations (for example, double-clicking or swiping). the network application may be a network-type application such as an online game, an online video player, and an online music player.

FIG. 3a is a schematic diagram of a mobile phone desktop. As shown in FIG. 3a, the user may click a video application icon on the mobile phone desktop to open a video application, thereby obtaining a schematic diagram of video display as shown in FIG. 3b.

Step 302: The environment detection component 121 detects that the network application is switched to the foreground or the network changes, and notifies the application-level policy management component 124.

Specifically, the environment detection component 121 in the service layer 12 in the electronic device 100 can continuously detect the status of the network application or the network environment. When the environment detection component 121 detects that any network application is switched to the foreground or the network environment changes, a first notification message may be sent to the application-level policy management component 124, where the first notification message may be used for notifying the application-level policy management component 124 that the network application is switched to the foreground or the network environment changes. It may be understood that, the first notification message may further include an identity identifier of the network application (for example, the identity identifier of the network application may be a UID), and the identity identifier may be used to identify the unique identity of the network application.

For example, the identity identifier of the network application may be implemented by the following code:

```
         kuid_t sock_i_uid(struct sock *sk)
          { kuid_t uid
              read_lock_bh(&sk->skcallback lock);
              uid=sk->sk_socket?SOCK_INODE(sk->sk_socket)->i_uid:
 GLOBAL_ROOT_UID;
              read_unlock_bh(&sk->sk_callback_lock);
              return uid;
          }
         EXPORT_SYMBOL(sock_i_uid).
```

Step 303: The application-level policy management component 124 receives the first notification message sent by the environment detection component 121, and determines whether the current network application meets conditions for enabling acceleration.

Specifically, after the application-level policy management component 124 receives the first notification message sent by the environment detection component 121, it may be determined from the first notification message that the network application is switched to the foreground. The application-level policy management component 124 may further determine whether the network application is included in a preset application whitelist.

In a specific implementation, an application whitelist may be preset in the application-level policy management component 124, and the application whitelist may include a plurality of network applications. Each network application may be identified by the identity identifier, and the application whitelist may be used for representing network applications that can be accelerated. The network applications in the preset application whitelist may include service types. For example, the service types of the network applications in the preset application whitelist may be sensitive, and the sensitive services may include delay-sensitive services, packet loss rate-sensitive services, and the like. By comparing the identity identifier of the network application in the first notification message with identity identifiers of network applications in the preset application whitelist, it may be determined whether the network application in the first notification message is included in the preset application whitelist. If the network application in the first notification message is included in the preset application whitelist, it may be determined that the network application meets the conditions for enabling acceleration; and if the network application in the first notification message is not included in the preset application whitelist, it may be determined that the network application does not meet the conditions for enabling acceleration.

For example, Table 1 is a whitelist of network applications.

**Table 1**

| Application name | Feature flow type | Channel quality parameter |
|---|---|---|
| Baidu network disk | Downloading flow | Rate |
| WeChat | Video flow | Delay/Packet Loss |
| Game | Battle flow | Delay/Packet Loss |

It may be understood that, if the current network application is not in the preset application whitelist, that is, the service type of the current network application is a non-sensitive service, the electronic device 100 may further detect other network channels with better quality when detecting that quality of the primary network channel becomes poor, so that the non-sensitive service may be directly switched to the network channels with better quality.

Step 304: The application-level policy management component 124 sends a channel enabling message to the flow-level path management component 131 for enabling a network channel.

Specifically, if the application-level policy management component 124 determines that the current network application meets the conditions for enabling acceleration, the channel enabling message may be sent to the flow-level path management component 131, where the channel enabling message is used for indicating that the flow-level path management component 131 can enable a network channel (for example, the primary network channel).

Step 305: The flow-level path management component 131 requests a path of the primary network channel from the channel-level path management component 123.

Specifically, after receiving the channel enabling message sent by the application-level policy management component 124, the flow-level path management component 131 may send a primary network channel request to the channel-level path management component 123, where the primary network channel request is used for requesting the path of the primary network channel. For example, the primary network channel may be a primary Wi-Fi channel.

Step 306: The channel-level path management component 123 sends the path of the primary network channel to the flow-level path management component 131.

Specifically, the channel-level path management component 123 may pre-configure paths of a plurality of network channels. For example, the plurality of network channels may include a primary Wi-Fi channel, a secondary Wi-Fi channel, a primary cellular channel, and a secondary cellular channel.

After the channel-level path management component 123 receives the primary network channel request sent by the flow-level path management component 131, one network channel may be selected from the plurality of network channels as the primary network channel (for example, the primary network channel is the primary Wi-Fi channel), and a path of the primary network channel may be sent to the flow-level path management component 131.

Step 307: The flow-level path management component 131 stores the received path of the primary network channel.

Specifically, after the flow-level path management component 131 receives the path of the primary network channel sent by the channel-level path management component 123, the path of the primary network channel may be stored. For example, the path of the primary network channel may be represented by Wi-Fi 1.

FIG. 3c is a schematic diagram of an effect after the mobile phone uses a primary network channel. As shown in FIG. 3c, after the mobile phone obtains a path of the primary network channel, the primary network channel may be used for video viewing.

It may be understood that, a current network application (for example, the video application in FIG. 3c) may include a plurality of flows (for example, video flows and audio flows), and the plurality of flows may be carried on the primary network channel.

Step 308: The application-level policy management component 124 sends a traffic detection request to the traffic sensing component 133.

Specifically, the traffic detection request may be used for instructing the traffic sensing component 133 to start packet statistics of network applications on the primary network channel. The traffic detection request may include an identity identifier (for example, UID) of a network application currently to be detected, and is used for requesting to detect a flow of the network application corresponding to the identity identifier UID on the primary network channel. It may be understood that, the flow of the network application may be in the form of a packet.

It should be noted that, this step 308 may be performed simultaneously with step 304, or may be performed at any moment after step 304, which is not specifically limited in this application.

Step 309: The traffic sensing component 133 sends a traffic reporting request to the traffic reporting component 141.

Specifically, after receiving the traffic detection request sent by the application-level policy management component 124, the traffic sensing component 133 may send the traffic reporting request to the traffic reporting component 141, where the traffic reporting request may be used for instructing the traffic reporting component 141 to detect a packet of the network application on the current primary network channel and report the detected packet. It may be understood that, the traffic detection request may include the identity identifier (for example, UID) of the network application.

Step 310: The traffic reporting component 141 performs traffic detection, and reports a detected packet to the traffic sensing component 133.

Specifically, after receiving the traffic reporting request sent by the traffic sensing component 133, the traffic reporting component 141 may detect a packet of a network application corresponding to the identity identifier of the network application according to the identity identifier (for example, UID) of the network application in the traffic reporting request, so that the packet of the network application on the primary network channel can be obtained, and the detected packet of the network application can be reported to the traffic sensing component 133.

In a specific implementation, the traffic reporting component 141 may call a component (for example, a Netfilter component of an Android system) to obtain the packet of the network application on the primary network channel. It may be understood that, the Netfilter component is only an exemplary description, and does not constitute a limitation on the embodiments of this application. In some embodiments, the detection of the packet may be alternatively completed by other components.

For example, parameters of the network channel may be implemented by the following code:

```
         typedef struct{
         bool available;
         bool slowDevForbbiden;
         uint64_t qoeBadTimeStamp;
         uint64_t chQoeBadStartTime;
         uint32_t rcvRate;
          }
```

It may be understood that, the detected packet may be a packet of one or more feature flows in the current network application, where the feature flow may be the most sensitive flow in the network application, that is, the flow that has a relatively high impact on the current network application. In addition, the quality of the network channel can be assessed through the parameters of the network channel.

Step 311: The traffic sensing component 133 receives the packet reported by the traffic reporting component 141, analyzes the packet, obtains a packet analysis result, and sends the packet analysis result to the flow-level policy management component 132.

Specifically, the packet may be a packet of each flow of the network application on the primary network channel. After receiving the packet of the network application detected by the traffic reporting component 141, the traffic sensing component 133 may analyze the packet, thereby obtaining the packet analysis result. The foregoing packet analysis may be to identify a plurality of feature flows based on features of the packet. The feature flows may be the most sensitive flows in the network application. For example, taking the Peace Elite game as an example, a feature flow of the game may be a voice flow, that is, the voice flow has a relatively large impact on the game and has the highest sensitivity. When quality of the voice flow is not good (for example, the delay and the packet loss rate do not meet the requirements), the game experience of the user is severely affected. Therefore, it is necessary to identify the voice flow, and further count voice flow packets in the packets. In a specific implementation, the packet analysis may be to count a packet loss rate and/or delay of the packet of the network application, to determine the quality of the feature flow, and further make a decision on whether to switch the feature flow. For example, the packet loss rate and/or delay of the packet within a preset duration may be counted. If the counted packet loss rate and/or delay meet the preset requirements, channel switching may not be required. If the counted packet loss rate and/or delay do not meet the preset requirements, the channel switching may be performed on the feature flow.

In addition, the identification of the packet of the voice flow may be implemented through heartbeat packet statistics. For example, taking the UDP protocol as an example, the data packet feature of the voice flow may be represented by the following feature:
uplink: udp.payload[6]=0x64; and
downlink: udp.payload[6]=0x65.

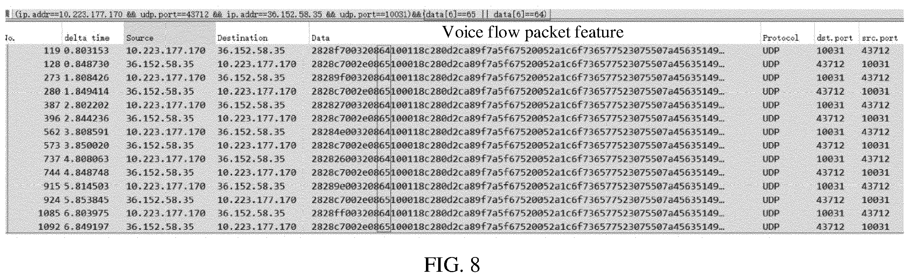

FIG. 8 is a schematic diagram of a heartbeat packet of a voice flow of the UDP protocol.

That is, by reading a preset field in a payload of the uplink and downlink packet, it may be identified whether the packet is a voice flow packet.

If the feature flow includes a plurality of flows (for example, voice flows and video flows), statistics may be performed on a packet of any one of the feature flows (for example, a voice flow), thereby obtaining a delay and/or packet loss rate of the packet of the voice flow. In a specific implementation, the packet of the voice flow within the preset duration may be counted. Preferably, the preset duration may be 5s, so that it may be determined as soon as possible whether the quality of the voice flow becomes poor, and then the voice flow may be switched to an alternate network channel as soon as possible, to provide better game experience. For example, if the delay and/or the packet loss rate of the packet of the voice flow cannot meet the requirements, it may be determined that the quality of the voice flow is poor. In this case, switching can be triggered to switch the voice flow to the alternate network channel.

It should be noted that, the foregoing example only takes a game as an example for illustration. In specific application, other network applications may also be included, for example, the Baidu network disk. The feature flow of the network application is a downloading flow, that is, a packet of the downloading flow can be found in the foregoing packet, and an influence factor of the packet of the downloading flow may be the rate. In addition, the network application may further include social network applications such as WeChat, and the feature flow of the network application is a video flow. That is, a packet of the video flow may be found in the foregoing packet, and an influence factor of the packet of the video flow may be the delay and/or the packet loss rate.

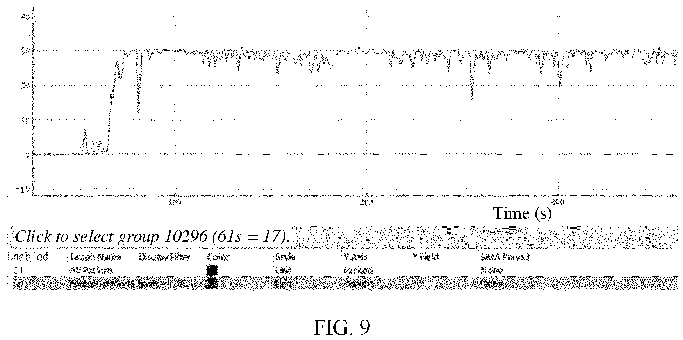

It may be understood that, in addition to the voice flow, the feature flow may further include a battle flow in the game. Taking Peace Elite as an example, whether the current packet flow is a battle flow may be determined by periodically counting a quantity of UDP packets. At present, a cycle used by Peace Elite is 500 ms. Therefore, whether the current packet flow is a battle flow may be determined by counting a total quantity of packets in the cycle. For example, if the total quantity of packets in the cycle of 500 ms is greater than 10, the packet flow is a battle flow. FIG. 9 is a schematic diagram of counting packets of a battle flow of the UDP protocol. As shown in FIG. 7, the horizontal axis is time, and the vertical axis is a total quantity of packets. Since the quantity of packets per second is basically kept at 30, it may be determined by calculation that there are 15 packets every 500 ms, and thus the packet flow may be determined as a battle flow.

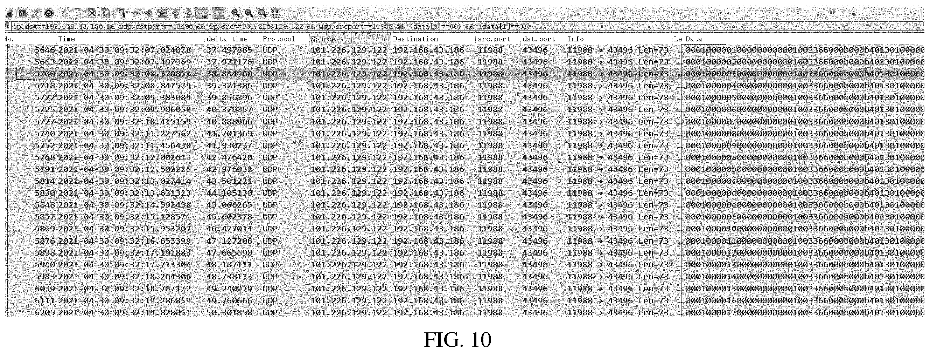

Taking King of Glory as an example, King of Glory uses the filtering UDP protocol number and the packet header feature payload=0x00010000 to filter a battle packet. FIG. 10 is a schematic diagram of a heartbeat packet of a battle flow of the UDP protocol.

Step 312: The flow-level policy management component 132 determines to perform switching based on the packet analysis result, and requests to obtain a path of an alternate network channel.

Specifically, after receiving the packet analysis result, the flow-level policy management component 132 may determine whether to perform switching. If the flow-level policy management component 132 determines to perform switching, the path of the alternate network channel may be requested.

For example, the foregoing requesting the path of the alternate network channel may be implemented by the following code:

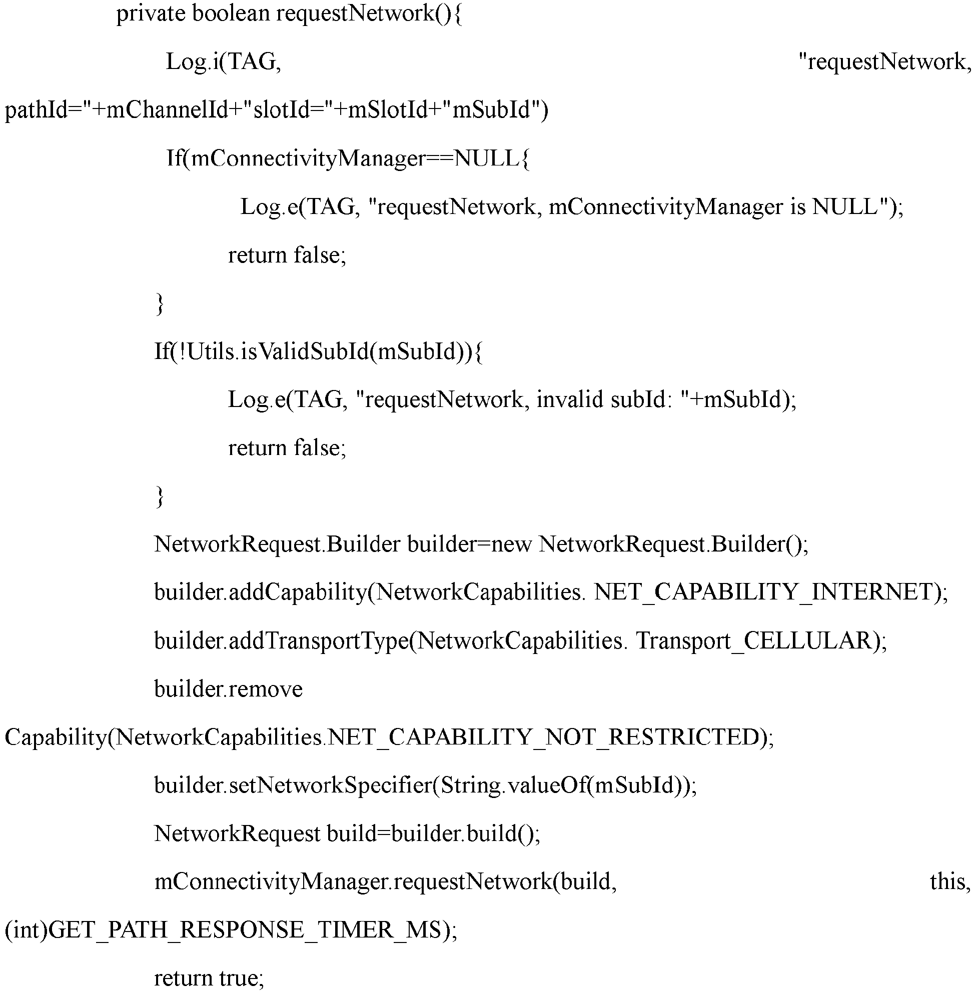

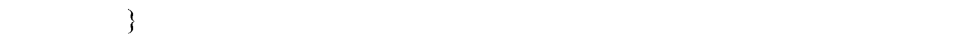

In addition, in a specific implementation, the path of the network channel (for example, the path may be represented by a device number of a network card or SIM card) may be defined in a data structure, and the code example is as follows:

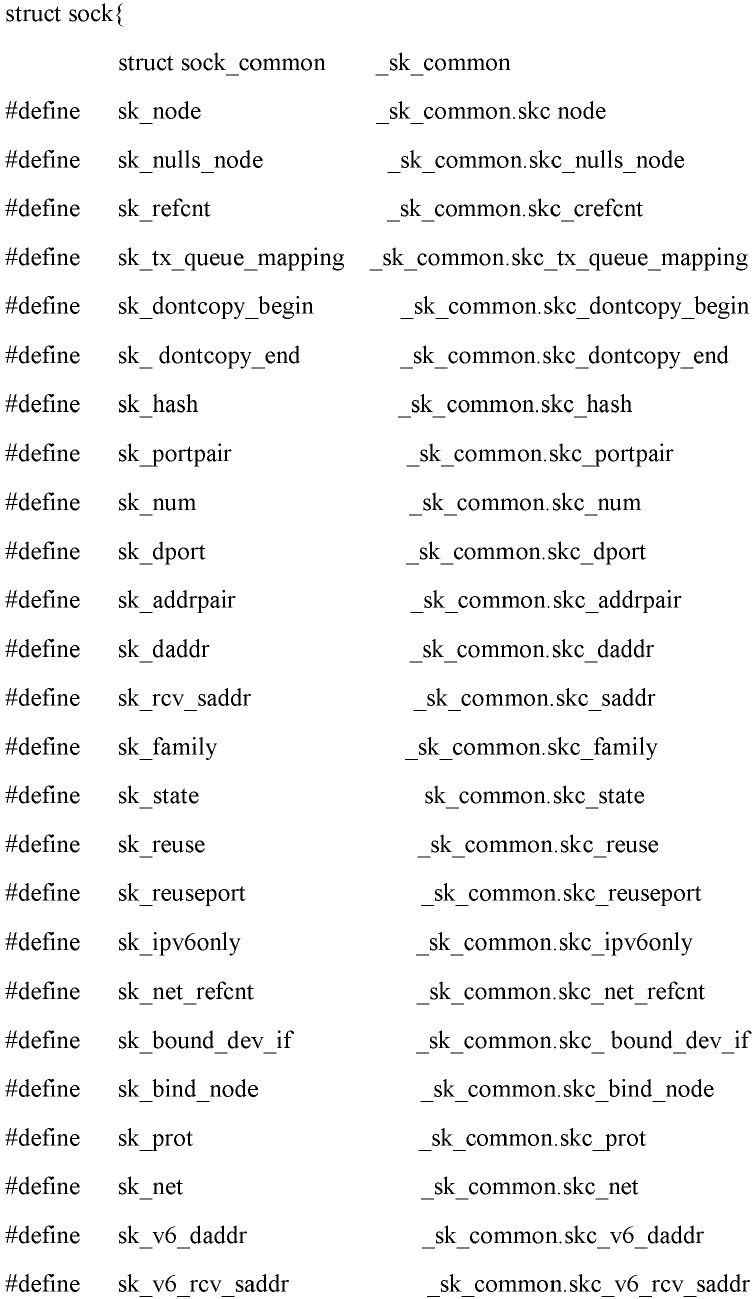

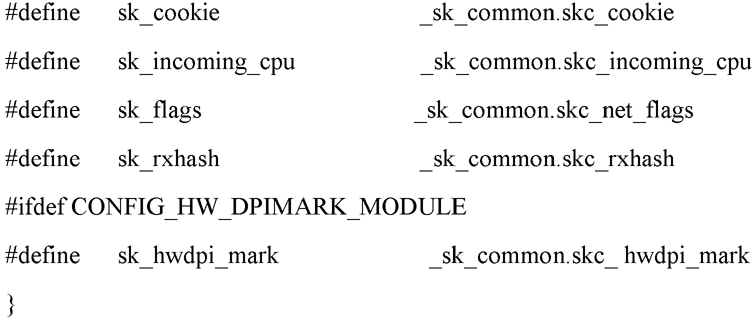

As shown in the code, sk_bound_dev_if is a device number of a target network card or target SIM card to be switched. It may be understood that, a packet may be received through the network card or the SIM card, and the code for receiving the packet may refer to the following example:
Pktinfo. msg. flow_msg.dev_if=sk->sk_bound_dev_if, where
pktinfo is the received packet, and msg.flow_msg is the name of the packet flow.

In a specific implementation, the manner of requesting the path of the alternate network channel may be that the flow-level policy management component 132 sends an alternate network channel request to the flow-level path management component 131 for requesting the alternate network channel. After receiving the alternate network channel request, the flow-level path management component 131 may forward the alternate network channel request to the channel-level path management component 123. After receiving the alternate network request, the channel-level path management component 123 may send a channel status request to the network detection component 122, where the channel status request may be used for requesting to obtain an enabling status of each optional network channel. It may be understood that, the enabling status may include an available state and an unavailable state. The available state may be used for indicating that the optional network channel may be enabled, and the unavailable state may be used for indicating that the optional network channel is prohibited from being enabled. The optional network channel may include a secondary Wi-Fi channel, a primary cellular channel, a secondary cellular channel, and the like.

After receiving the channel status request sent by the channel-level path management component 123, the network detection component 122 may detect an enabling status of each optional network channel. In a specific implementation, the network detection component 122 may be configured to manage a switch of each optional network channel. When any optional network channel is enabled, the optional network channel is in the available state; and when any optional network channel is disabled, the optional network channel is in the unavailable state. Therefore, after detecting the enabling statuses of all optional network channels requested by the channel-level path management component 123, the network detection component 122 may send the enabling statuses of all the optional network channels to the channel-level path management component 123.

After receiving the enabling statuses of the optional network channels, the channel-level path management component 123 may select an available network channel (that is, an optional network channel in the available state), and may further send a channel assessment request to the channel and application quality assessment component 125, where the channel assessment request may be used for requesting assessment of the quality of the available network channels.

After receiving the channel assessment request sent by the channel-level path management component 123, the channel and application quality assessment component 125 may assess the quality of each available network channel according to the channel assessment request. For example, the channel quality may include a delay, a packet loss rate, a bandwidth, and a rate of the channel. The assessment may be to assess a round-trip time (Round-Trip Time, RTT) of the available network channels, and the network channel with the smallest round-trip time is the best. Optionally, when an available network channel has a historical selection record, that is, the available network channel has been selected as a network channel, in this case, the channel quality may be assessed in combination with the RTT and historical records. The historical records may include a historical reception rate, a historical quantity of times that the channel quality is poor, and the like. The manner of assessing the channel quality is not specifically limited in the embodiments of this application. After the channel and application quality assessment component 125 completes the quality assessment of all available network channels in the channel assessment request, an assessment result may be sent to the channel-level path management component 123.

After receiving the assessment result, the channel-level path management component 123 may select the best available network channel as the alternate network channel based on the assessment result, and may send a path of the alternate network channel to the flow-level path management component 131.

After receiving the path of the alternate network channel sent by the channel-level path management component 123, the flow-level path management component 131 may send a switching notification, where the switching notification includes the path of the alternate network channel.

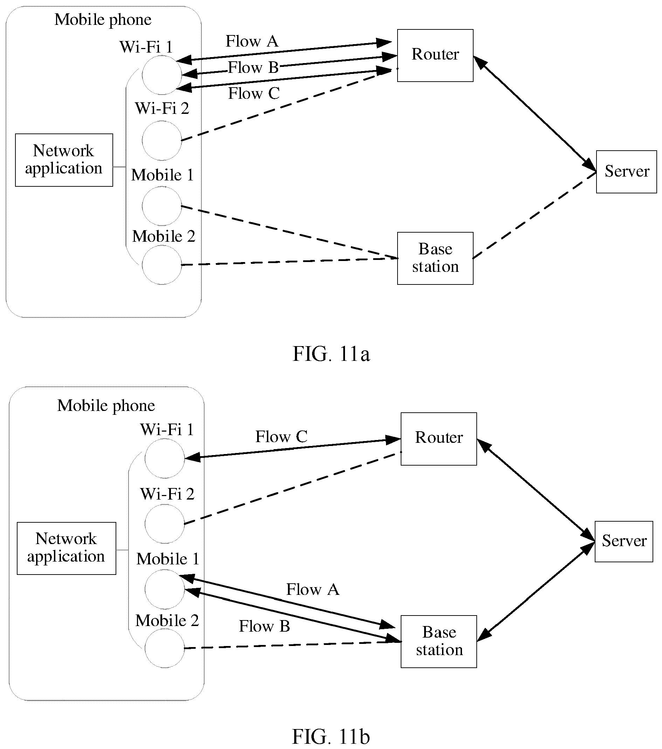

The selection of the alternate network channel is described by taking a mobile phone as an example with reference to FIG. 11a to FIG. 11c. As shown in FIG. 11a, the mobile phone has capabilities of four network channels including a primary Wi-Fi channel (for example, Wi-Fi 1), a secondary Wi-Fi channel (for example, Wi-Fi 2), a primary cellular channel (for example, Mobile 1), and a secondary cellular channel (for example, Mobile 2). It is assumed that the mobile phone currently runs a network application (for example, WeChat) on the Wi-Fi 1 channel (primary network channel), and the network application includes feature flow A (for example, a video flow), feature flow B (for example, an audio flow), and non-feature flow C. When the mobile phone determines that the quality of feature flow A becomes poor and determines to perform switching, an alternate network channel may be detected, where the alternate network channel may be the channel with the best quality among the secondary Wi-Fi channel (for example, Wi-Fi 2), the primary cellular channel (for example, Mobile 1), and the secondary cellular channel (for example, Mobile 2). After one network channel is selected from the secondary Wi-Fi channel (for example, Wi-Fi 2), the primary cellular channel (for example, Mobile 1), and the secondary cellular channel (for example, Mobile 2) as the alternate network channel (for example, the Mobile 1 channel), switching may be performed. Next, both feature flow A and feature flow B may be switched to the alternate network channel, that is, the Mobile 1 channel. As shown in FIG. 11b, in this case, non-feature flow C may continue to be carried on the primary network channel, that is, the Wi-Fi channel, and feature flow A and feature flow B may be carried on the alternate network channel, that is, the Mobile 1 channel.

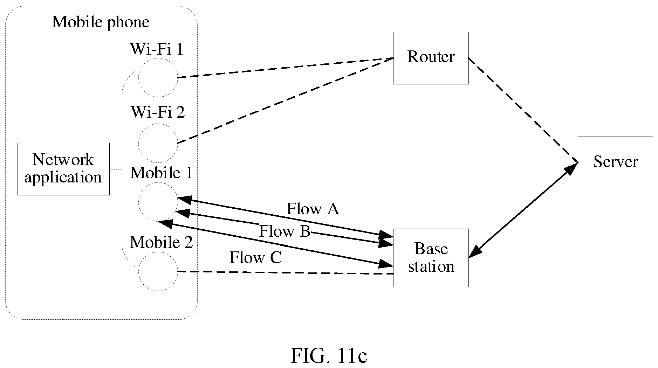

Optionally, when the mobile phone analyzes the packet and finds that the quality of feature flow A no longer meets the requirements, feature flow A, feature flow B, and non-feature flow C may be switched to the alternate network channel, that is, the Mobile 1 channel. As shown in FIG. 11c, in this case, feature flow A, feature flow B and non-feature flow C are all carried on the Mobile 1 channel.

Step 313: The flow-level path management component 131 sends the path of the alternate network channel to the flow-level policy management component 132.

Step 314: The flow-level policy management component 132 sends a channel switching instruction to the policy execution component 142.

Specifically, after receiving the path of the alternate network channel sent by the flow-level path management component 131, the flow-level policy management component 132 may send the channel switching instruction to the policy execution component 142, where the channel switching instruction may be used for instructing the policy execution component 142 to switch the plurality of feature flows from the current primary network channel to the alternate network channel, so that the channel switching can be completed faster, the delay caused by the channel switching can be reduced, and the user experience can be improved.

Step 315: The policy execution component 142 performs channel switching.

Specifically, after receiving the channel switching instruction sent by the flow-level policy management component 132, the policy execution component 142 may switch the plurality of feature flows from the current primary network channel to the alternate network channel. That is, other flows of the network application may continue to be carried and run on the primary network channel, and the plurality of feature flows may be carried and run on the alternate network channel, so that the switching can be completed quickly, thereby ensuring the service quality and the user experience.

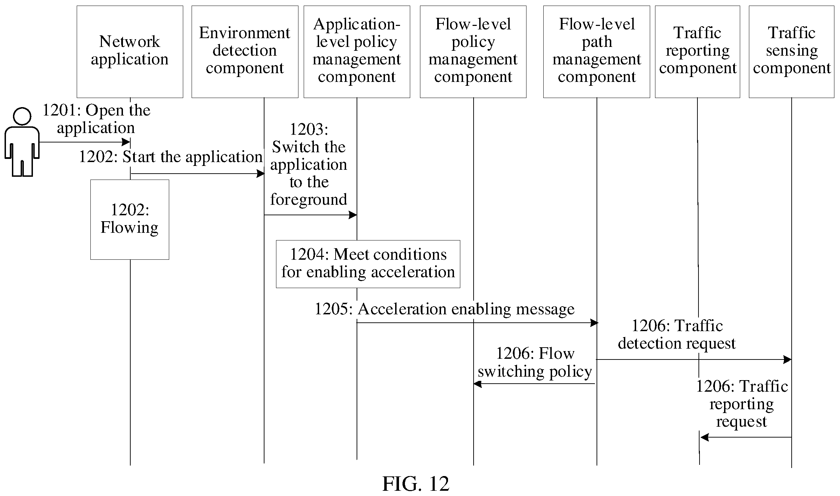

The channel switching method according to the embodiments of this application is described in detail below with reference to the system framework diagram of the first device shown in FIG. 5 through the sequence diagram of interaction between components in the first device shown in FIG. 12 to FIG. 14b.

FIG. 12 is a sequence diagram of interaction between components in the first device according to an embodiment of this application. As shown in FIG. 12, the method may include:

Step 1201: Start a network application in response to a user operation.

For the implementation of this step, reference may be made to step 301, and details are not described herein again.

Step 1202: The network application performs flowing with a server.

The user selects a service in the network application, and the network application transmits a flow required by the service with the server according to the service. The network application may use a network channel (for example, a primary network channel) to transmit the flow with the server. In an example where the network application is a video application and the user chooses to play a video, the flow required by the service may include a video flow and an audio flow, and the video flow and the audio flow may be carried on the primary network channel. Correspondingly, the mobile phone may use the primary network channel to interact with the server, obtain the video flow and the audio flow from the server, and play the video.

It should be noted that, this embodiment of this application focuses on how to implement network channel switching after the network application starts to use the primary network channel to interact with the server, and how to use the primary network channel to start interacting with the server after the initial startup of the network application is not limited in this embodiment of this application.

Step 1203: The environment detection component 121 detects that the network application is switched to the foreground, and notifies the application-level policy management component 124.

For the implementation of this step, reference may be made to the description in step 302, and details are not described herein again.

Step 1204: The application-level policy management component 124 determines whether the network application meets conditions for enabling acceleration.

For the implementation of this step, reference may be made to the description in step 303, and details are not described herein again.

The implementation of the network application whitelist is further described.

In this embodiment of this application, an example is taken where data of a network application is divided into flows according to types, where one type corresponds to one flow of the network application. As shown in Table 2 below, in addition to network applications that need to be accelerated, the network application whitelist may further record:
a type of a target flow that needs to be monitored in each network application, for example, as a type field of a target flow shown in Table 2;
a flow model corresponding to a type of each target flow, for example, as a flow model field shown in Table 2 below;
a network quality assessment parameter used for assessing network quality of a target flow, for example, as a channel quality parameter field shown in Table 2; and
a policy for performing channel switching on a flow of a network application after the network quality of the target flow is assessed to become poor, which is referred to as a flow switching policy, for example, as a flow switching policy field shown in Table 2 below.

**Table 2**

| Application name | Type of target flow | Flow model of feature flow | Channel quality parameter | Flow switching policy |
|---|---|---|---|---|
| Baidu network disk | Video downloading flow | Four-tuple 1 | Rate | Video downloading flow, voice downloading flow |
| WeChat | Video flow | Quad 2 | Delay/Packet Loss | Video flow, voice flow |
| Game | Game battle flow | Four-tuple 3 | Delay/Packet Loss | Game battle flow, voice flow |

Optionally, the target flow may be a flow that can be quickly expressed on one or some network quality assessment parameters when the quality of the network channel carrying the target flow becomes poor, for example, may be one or more feature flows of a network application.

Optionally, the network quality assessment parameter of the target flow may be a parameter that can quickly reflect that the network quality of the target flow becomes poor.

The flow switching policy records a flow whose network channel needs to be switched together with the target flow. Optionally, a flow recorded in the flow switching policy is generally a flow that has a relatively large impact on service processing in a network application, such as the feature flows of network applications in the foregoing description, video flows and audio flows in video playback applications, and game battle flows and voice flows in game applications.

Optionally, a flow recorded in the flow switching policy whose network channel needs to be switched together with the target flow may be a flow that is sensitive to the same network assessment parameter as the target flow. For example, if the target flow is a flow sensitive to the delay (referred to as a delay-sensitive flow for short below), flows in the flow switching policy are some or all of delay-sensitive flows including the target flow in the network application. If the target flow is a flow sensitive to the packet loss rate (referred to as a packet loss rate-sensitive flow), flows in the flow switching policy are some or all of packet loss rate-sensitive flows including the target flow in the network application. Therefore, the network quality of the target flow becomes poor, and network channel switching is performed on a type of flows sensitive to the same network assessment parameter in the network application.

Optionally, the flow model corresponding to the target flow type is configured to record feature information of a packet that needs to be monitored in the target flow. For example, the feature information may be at least one of the following feature information: a four-tuple and a five-tuple of a packet, a protocol number, a string in a payload, and the like.

It should be noted that, in the flow switching policy in the embodiments of this application, when the quality of a specific flow of the network application becomes poor, network channel switching may be performed on a plurality of flows of the network application including the flow on the same network channel, so that the plurality of flows are switched from the current network channel to other network channels with relatively better quality, to avoid lag in services of the network application. For example, in Table 2, if the video flow of WeChat becomes poor, and the video flow and the voice flow of WeChat are on the same network channel, network channel switching is performed on both the video flow and the voice flow of WeChat, to change the video flow and the voice flow from the current network channel to a network channel with relatively better quality, thereby reducing the possibility of lag in video and voice playback on WeChat.

Step 1205: The application-level policy management component 124 sends an acceleration enabling message to the flow-level path management component 131.

Specifically, if the application-level policy management component 124 determines that the current network application meets the conditions for enabling acceleration, the acceleration service for the network application can be enabled, and the acceleration enabling message is sent to the flow-level path management component 131, where the acceleration enabling message is used for indicating that the flow-level path management component 131 can enable the acceleration service for the network application.

The acceleration service may include, but is not limited to:
enabling an alternate network channel when the environment where the electronic device is located or the system environment of the electronic device changes, so that the alternate network channel transitions from a sleep state to an awake state; and/or
monitoring the network quality of a plurality of flows in the network application, and switching, when the electronic device monitors that quality of a flow of the network application becomes poor, the plurality of flows of the network application, including the flow whose quality becomes poor, to the alternate network channel, so that the plurality of flows of the network application are always carried on the network channels with relatively good quality, which ensures the transmission quality of flows, reduces the possibility of lag in services in the network application, and improves the user experience. It should be noted that, if the electronic device has enabled the alternate network channel when the decision to switch the plurality of flows to the alternate network channel is made, the plurality of flows are switched to the enabled alternate network channel. If the electronic device has not enabled the alternate network channel when the decision to switch the plurality of flows to the alternate network channel is made, the electronic device needs to enable an alternate network channel first, and then switch to the enabled alternate network channel.

Optionally, the acceleration enabling message may include information corresponding to an identity identifier of the current network application in the network application whitelist, for example, the identity identifier of the current network application, the target flow type, the flow model corresponding to the target flow type, network quality assessment parameter information, and flow switching policy information. For details, reference may be made to the foregoing related descriptions, and details are not described herein again.

Optionally, the flow-level path management component 131 may store a path of the currently used network channel, where the path is also a path of the network channel used by the network application. Alternatively, if the path of the currently used network channel is not stored in the flow-level path management component 131, that is, the path of the network channel used by the network application is not stored in the flow-level path management component 131, the flow-level path management component 131 may request the channel-level path management component 123 for the path of the network channel used by the network application, and the channel-level path management component 123 may send the path of the network channel used by the network application to the flow-level path management component 131.

Step 1206: The flow-level path management component 131 sends the identity identifier of the network application and the flow switching policy information to the flow-level policy management component 132 and sends a traffic detection request to the traffic sensing component 133, and the traffic sensing component 133 sends a traffic reporting request to the traffic reporting component.

Optionally, the traffic detection request may include a first configuration file for the network application, and the first configuration file may include: the identity identifier of the network application, the target flow type, the flow model corresponding to the target flow type, and the network quality assessment parameter information.

Optionally, the traffic reporting request may include a second configuration file for the network application, and the second configuration file may include: the identity identifier of the network application, the target flow type, and the flow model corresponding to the target flow type.

It should be noted that, the purpose of this step is to initialize various related information for the current network application to the flow-level policy management component 132, the traffic sensing component 133, and the traffic reporting component 141. Therefore, in other possible implementations, the flow-level path management component 131 may alternatively directly send the second configuration file for the network application to the traffic reporting component 141, which is not limited herein.

Through the processing of this step, the traffic reporting component may be triggered to start monitoring the flows in the network application, and then the subsequent network channel switching process for the flow may be triggered.

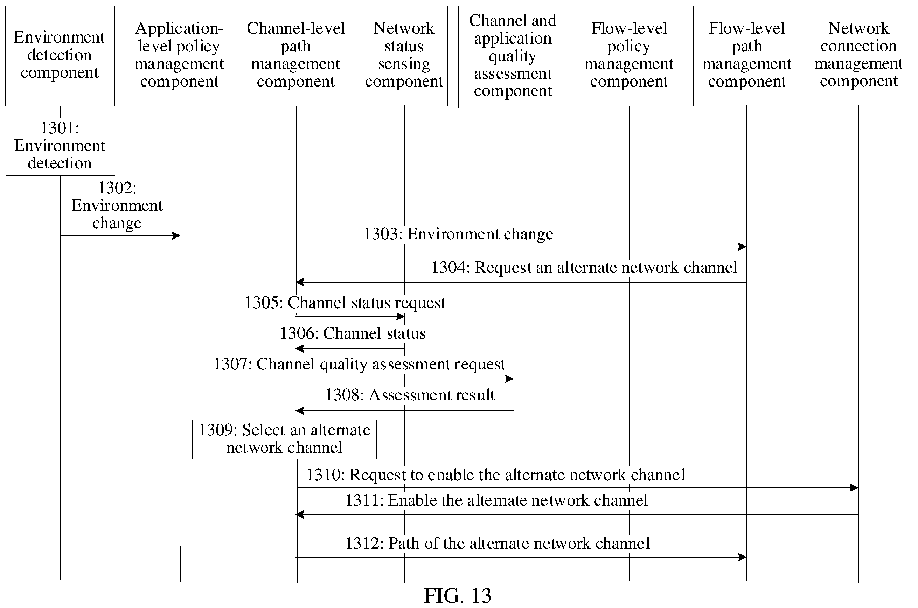

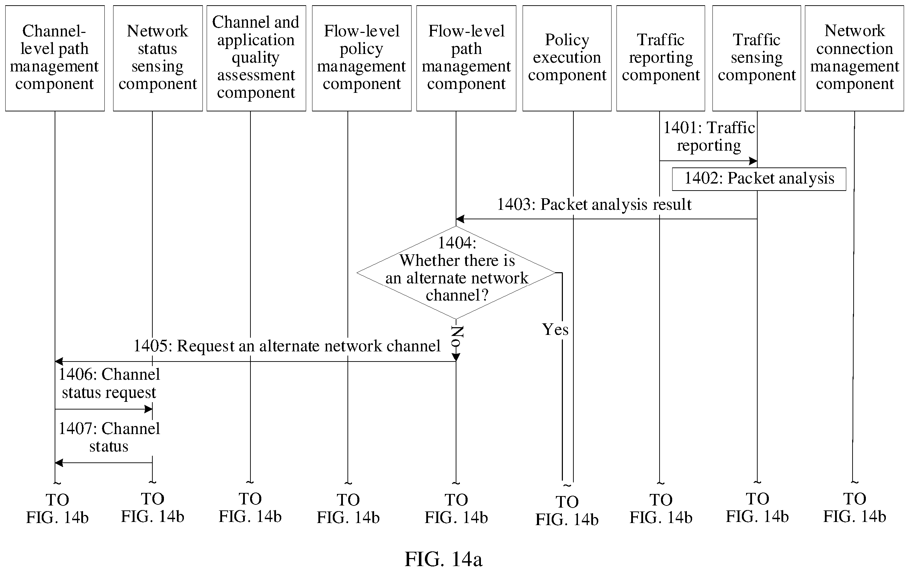

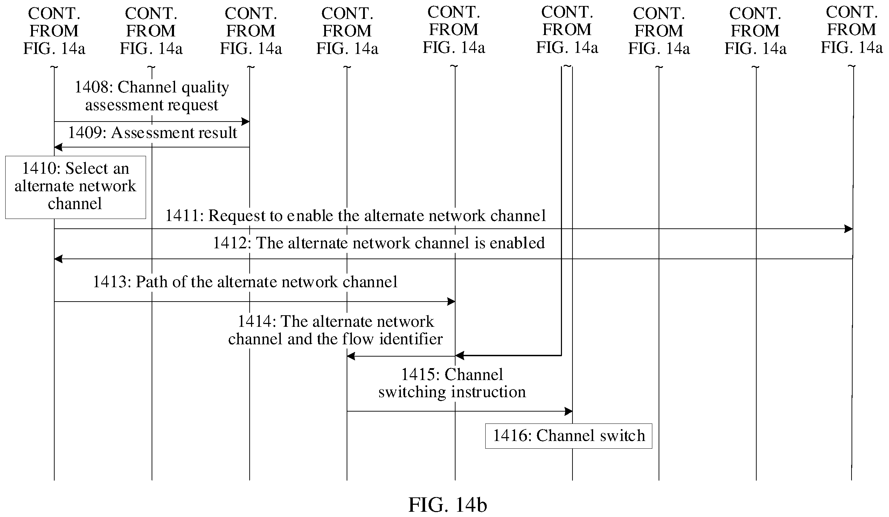

The process of enabling the alternate network channel by the electronic device and the process of switching the channels of the flows are described below with reference to FIG. 13, and FIG. 14a and FIG. 14b respectively.

FIG. 13 is another sequence diagram of interaction between components in the first device according to an embodiment of this application. As shown in FIG. 13, the method may include:
Step 1301: The environment detection component 121 performs environment detection.

Specifically, the environment detected by the environment detection component may include a physical environment where the first device is located, or may include a system environment in the first device. For example, the physical environment may include: elevators, high-speed trains, garages, and other scenes with poor network; and the system environment may include: device temperature, and the like.

Taking the elevator scene as an example, when the user enters the elevator, rising or falling of the elevator causes a change of the gravity of the user. For example, rising of the elevator causes overweight, and falling of the elevator causes weightlessness. Therefore, detection may be performed by using an acceleration sensor in the first device. When the acceleration sensor detects that the user is weightless or overweight, that is, detects the acceleration of the first device in the vertical direction, it may be determined that the user is in the elevator environment.

In addition, since the elevator stops according to the needs of different users (for example, different users may click on different floors) during the rising or falling process, the elevator may continue to run in the vertical direction, or may stop and go. Since the first device does not detect the movement in the horizontal direction during the rising or falling of the elevator, it may still be determined that the first device is in the elevator, where the movement in the horizontal direction may be detected by the acceleration sensor in the first device. For example, if the acceleration in the horizontal direction is detected through the acceleration sensor, it may be determined that there is movement in the horizontal direction.

When the first device detects that the first device has acceleration in the horizontal direction, that is, when the first device moves horizontally, it may be determined that the user has exited the elevator. In other words, the first device has exited the elevator. In this case, there is no need to detect the alternate network channel in advance, and there is no need to send a scene change notification message to the application-level policy management component 124, thereby reducing the power consumption of the electronic device due to the detection of the alternate network channel.

Optionally, the electronic device may alternatively determine whether the scene where the user is located changes by detecting the signal strength of the mobile network. For example, when the signal strength of the mobile network becomes weak, it may be determined that the user has entered a poor network environment. In this case, the first device may determine that the scene changes, and may send the scene change notification message to the application-level policy management component 124, where the packet is used for detecting the alternate network channel in advance. When the signal strength of the mobile network becomes stronger, it may be determined that the user has entered a better network environment. In this case, there is no need to detect the alternate network channel in advance, and there is no need to send a scenario change notification message to the application-level policy management component 124, thereby reducing the power consumption of the electronic device due to the detection of the alternate network channel.

Step 1302: The environment detection component 121 sends an environment change notification message to the application-level policy management component 124.

Specifically, if the environment detection component 121 detects that the environment of the first device changes (for example, the user enters an elevator), the environment change notification message may be sent to the application-level policy management component 124, where the environment change notification message is used for notifying the application-level policy management component 124 that the environment where the user is located changes, so that the application-level policy management component 124 can be triggered to perform subsequent processing.

Step 1303: The application-level policy management component 124 forwards the environment change notification message to the flow-level path management component 131.

Step 1304: The flow-level path management component 131 requests an alternate network channel from the channel-level path management component 123.

Specifically, since the signal is usually poor in the elevator, the selection, activation, and switching of the network channel after entering the elevator causes a large service delay, resulting in poor user experience. Therefore, when it is detected that the user enters the elevator, an alternate network channel may be pre-selected, thereby speeding up the channel switching and reducing the delay caused by the channel switching to the service.

Step 1305: The channel-level path management component 123 receives an alternate network channel request, and requests an enabling status of each optional network channel.

Specifically, after receiving the alternate network channel request sent by the flow-level path management component 131, the channel-level path management component 123 may send the channel status request to the network detection component 122, where the channel status request may be used for requesting to obtain an enabling status of each optional network channel. It may be understood that, the enabling status may include an available state and an unavailable state. The available state may be used for indicating that the optional network channel may be enabled, and the unavailable state may be used for indicating that the optional network channel is prohibited from being enabled. The optional network channel may include a secondary Wi-Fi channel, a primary cellular channel, a secondary cellular channel, and the like.

Step 1306: The network detection component 122 detects the enabling status of each optional network channel, and sends the enabling status of each optional network channel to the channel-level path management component 123.

Specifically, after receiving the channel status request sent by the channel-level path management component 123, the network detection component 122 may detect an enabling status of each optional network channel. In a specific implementation, the network detection component 122 may be configured to manage a switch of each optional network channel. When any optional network channel is enabled, the optional network channel is in the available state; and when any optional network channel is disabled, the optional network channel is in the unavailable state. Therefore, after detecting the enabling status of all optional network channels requested by the channel-level path management component 123, the network detection component 122 may send the enabling status of all the optional network channels to the channel-level path management component 123.

Step 1307: The channel-level path management component 123 requests quality of each available network channel.

Specifically, after receiving the enabling status of the optional network channels, the channel-level path management component 123 may select an available network channel (that is, an optional network channel in the available state), and may further send a channel assessment request to the channel and application quality assessment component 125, where the channel assessment request may be used for requesting assessment of the quality of the available network channels.

Step 1308: The channel and application quality assessment component 125 assesses quality of each available network channel, and sends an assessment result to the channel-level path management component 123.

Specifically, after receiving the channel assessment request sent by the channel-level path management component 123, the channel and application quality assessment component 125 may assess the quality of each available network channel according to the channel assessment request.

For example, the quality of a network channel may be assessed according to at least one parameter of the network channel: a delay, a packet loss rate, a bandwidth, and a rate of the channel. For example, the quality assessment may be to assess a round-trip time (Round-Trip Time, RTT) of the available network channels, and the network channel with the smallest round-trip time is the best.

Optionally, when an available network channel has a historical selection record, that is, the available network channel has been selected as a network channel, in this case, the channel quality may be assessed in combination with the RTT and historical records. The historical records may include a historical reception rate, a historical quantity of times that the channel quality is poor, and the like. The manner of assessing the channel quality is not specifically limited in the embodiments of this application.

After the channel and application quality assessment component 125 completes the quality assessment of all available network channels in the channel assessment request, an assessment result may be sent to the channel-level path management component 123.

Step 1309: The channel-level path management component 123 determines an alternate network channel based on the assessment result.

Specifically, after receiving the assessment result, the channel-level path management component 123 may select the best available network channel as the alternate network channel based on the assessment result.

Step 1310: The channel-level path management component 123 requests the network connection management component 126 to enable the alternate network channel.

Step 1311: The network connection management component 126 enables the alternate network channel, and feeds back a notification message that the alternate network channel is enabled to the channel-level path management component 123.

The network connection management component 126 enables the alternate network channel in response to the request of the channel-level path management component 123, where the enabling the alternate network channel refers to enabling the alternate network channel to transition from the sleep state to the awake state, to quickly switch from the current network channel to the alternate network channel when the network channel switching is required subsequently.

It may be understood that, since only the scene change is detected in step 1301, that is, the current scene change may cause the network quality to become poor, and may further lead to lag in services. However, the switching conditions are not met. In this case, the electronic device does not switch to the alternate network channel, that is, the electronic device still uses the original network channel to carry the flows of the network application.

Step 1312: The channel-level path management component 123 sends the path of the alternate network channel to the flow-level path management component 131.

Therefore, the flow-level path management component 131 may receive and store the path of the alternate network channel sent by the channel-level path management component 123.

Through the foregoing processing, the electronic device may enable the alternate network channel after detecting the environment change, so that when it is determined to switch the network channel subsequently, the network channel switch can be completed quickly, and the possibility of lag in services of the network application is reduced.

FIG. 14a and FIG. 14b are another sequence diagram of interaction between components in the first device according to an embodiment of this application. As shown in FIG. 14a and FIG. 14b, the method may include:

Step 1401: The traffic reporting component 141 performs traffic detection, and reports a detected packet to the traffic sensing component 133.

Specifically, based on the foregoing step 1206, after receiving the traffic reporting request, the traffic reporting component 141 may detect a packet of a target flow of the network application according to the traffic reporting request, and report a detection result to the traffic sensing component 133. The foregoing detection result may include: the packet of the target flow, or the packet of the target flow and packet statistics information of the target flow, and the like.

In a specific implementation, the traffic reporting component 141 may call a component (for example, a Netfilter component of an Android system) to obtain the packet of the target flow of the network application on the current network channel (for example, the primary network channel). It may be understood that, the Netfilter component is only an exemplary description, and does not constitute a limitation on the embodiments of this application. In some embodiments, the detection of the packet may be alternatively completed by other components.

For example, parameters of the network channel may be implemented by the following code:

```
         typedef struct{
         bool available;
         bool slowDevForbbiden;
         uint64_t qoeBadTimeStamp;
         uint64_t chQoeBadStartTime;
         uint32_t rcvRate;
          }
```

It may be understood that, the detected packet may be a packet of one or more feature flows in the current network application, where the feature flow may be the most sensitive flow in the network application, that is, the flow that has a relatively high impact on the current network application. In addition, the quality of the network channel can be assessed through the parameters of the network channel.

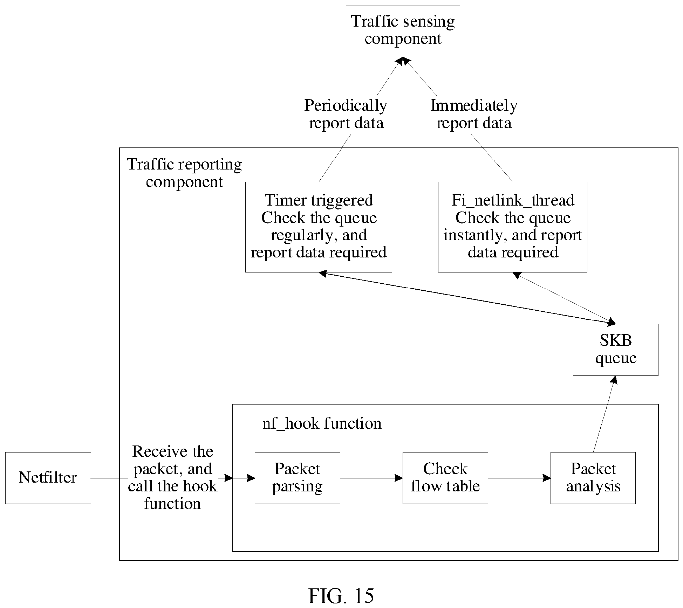

Optionally, when the traffic reporting component 141 performs traffic detection, a hook function may be registered in a kernel Netfilter framework to obtain the packet of the target flow. The overall implementation block diagram is shown in FIG. 15. Netfilter hooks the packet to the nf_hook function of the traffic reporting component. The packet carried on the current network channel then enters the traffic reporting component 141. The traffic reporting component undergoes processes such as packet analysis, flow table creation, and packet content analysis, and store the packet of the target flow in a SKB queue. For the packet in the SKB queue, according to a reporting policy of the target flow to which the packet belongs, data that needs to be reported regularly (a packet, or a packet and statistics information) is triggered by a timer and reported to the traffic sensing component 133, and a packet that needs to be reported immediately is reported to the traffic sensing component 133 by the thread of NetLink.

It should be noted that, there may be one or more target flows; and when the traffic reporting component detects packets of the target flow, all or some of the packets of the target flow may be reported to the traffic sensing component, which is not limited in this embodiment of this application.

Taking the detection and reporting of a heartbeat flow packet in the target flow as an example, the specific implementation process of the packet reporting component is described with reference to FIG. 15.

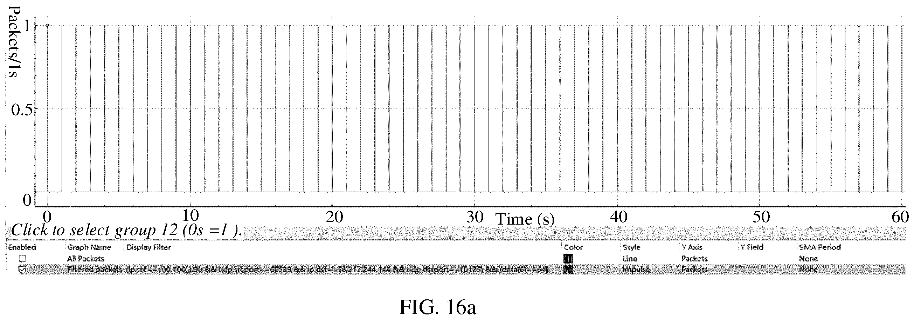

The heartbeat flow packet in this embodiment of this application may be a packet that appears in the target flow at a specific time interval. For example, the heartbeat flow packet may be a packet in which fixed feature information exists at a fixed position of a payload among the packets of the target flow. The time interval of the heartbeat flow packet in this embodiment of this application is not limited in this embodiment of this application, and is, for example, 1s. FIG. 16a is a schematic diagram of a heartbeat flow packet with an interval of 1s. Correspondingly, the traffic sensing component 133 may calculate a round-trip time according to the heartbeat flow packet subsequently, and use the round-trip time as a network quality assessment parameter of the target flow to determine the network quality of the target flow.

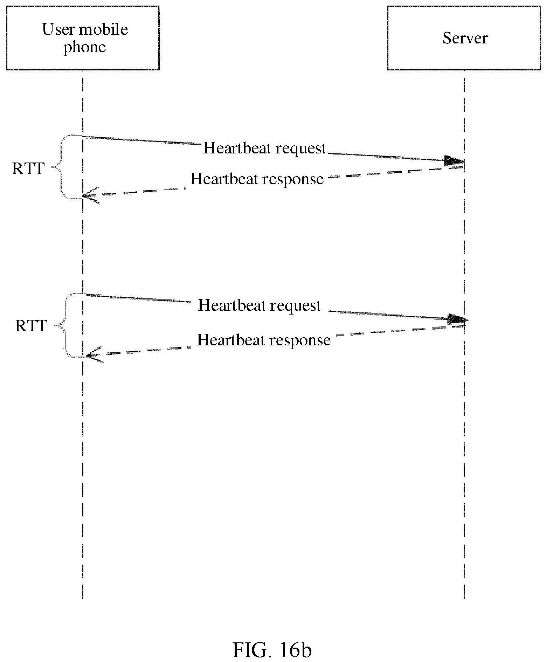

The foregoing round-trip time (Round-Trip Time, RTT) is an important performance indicator of the network, which represents a total of delay from the sender sending data to the sender receiving the acknowledgment from the receiver (the receiver sends the acknowledgment immediately after receiving the data). FIG. 16b is a schematic diagram of a method for calculating a round-trip time of a heartbeat flow packet. In FIG. 16b, the heartbeat flow packet transmitted between the mobile phone of the user and the server is taken as an example. The round-trip time of the heartbeat flow packet is a total of delay from the mobile phone of the user starting sending a heartbeat request packet to the server, to the mobile phone of the user receiving a heartbeat response packet fed back by the server.

For example, the heartbeat flow packet provided in this embodiment of this application may have the following characteristics: (ip.src==100.100.3.90 && udp.srcport==60539 && ip.dst==58.217.244.144 && udp.dstport== 10126) && (data[6]==64). ip.src represents the source ip, udp.srcport represents the source port number, ip.dst represents the destination ip, udp.dstport represents the destination port number, and data[6] represents the sixth byte of the payload of the packet. The source ip, the destination ip, the source port number, and the destination port number are the four-tuple of the heartbeat flow.

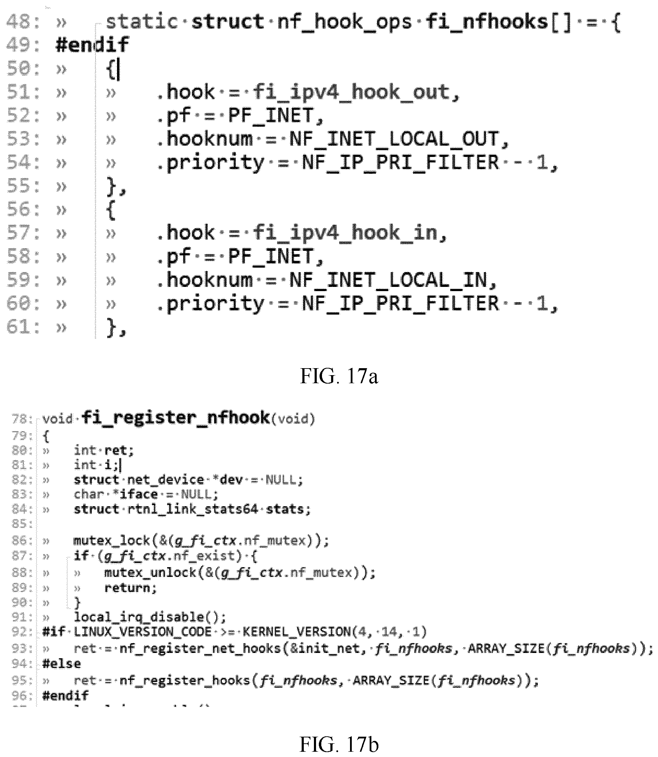

Referring to FIG. 15, the specific implementation process of the packet reporting component may include:
Step S1: Initialization.
   When the network application is started and loaded, the traffic reporting component 141 receives an app launch message and register the nf_hook hook function. Code examples are shown in FIG. 17a and FIG. 17b.
Step S2: packet processing.

This step further includes three steps of packet parsing, flow table lookup, and packet analysis. The flow table records identification information of a flow in each network application and statistics information of each flow. The statistics information of each flow may include: a quantity of packets of the received flow, a total quantity of bytes of the packets of the received flow, a quantity of error packets, and the like. The identification information of the flow may be calculated according to a four-tuple or five-tuple of the packet in the flow, and the foregoing calculation may specifically use the hash algorithm, so that the identification information of the flow may be a hash value calculated by the four-tuple or five-tuple of the packet.

During packet parsing, the traffic reporting component 141 obtains the packet, and may parse whether the UID of the network application exists in the packet. If the UID exists, it indicates that the packet is a packet of the network application, and the four-tuple (or five-tuple) of the packet is then parsed and subsequent flow table query steps are performed. If the UID does not exist, it indicates that the packet is not a packet of the network application, and the process ends.

The foregoing four-tuple may include: the source IP, the destination IP, the source port, and the destination port. The five-tuple may include: the source IP, the destination IP, the source port, the destination port, and the protocol number.

During flow table lookup, the identification information of the flow may be calculated according to the four-tuple (or five-tuple) of the packet. The calculated identification information may be used to find out whether the identification information has been recorded in the flow table, and if so, statistics information corresponding to the identification information in the flow table is updated. If not, a flow node is created in the flow table according to the identification information of the flow, and statistics information of the flow in the flow node is updated.

During packet analysis, the traffic reporting component 141 may filter the received packet through a preset flow model, to obtain all or some of the packets of the target flow. For example, if the foregoing flow model of the heartbeat flow packet is used, the heartbeat flow packet of the target flow can be obtained.

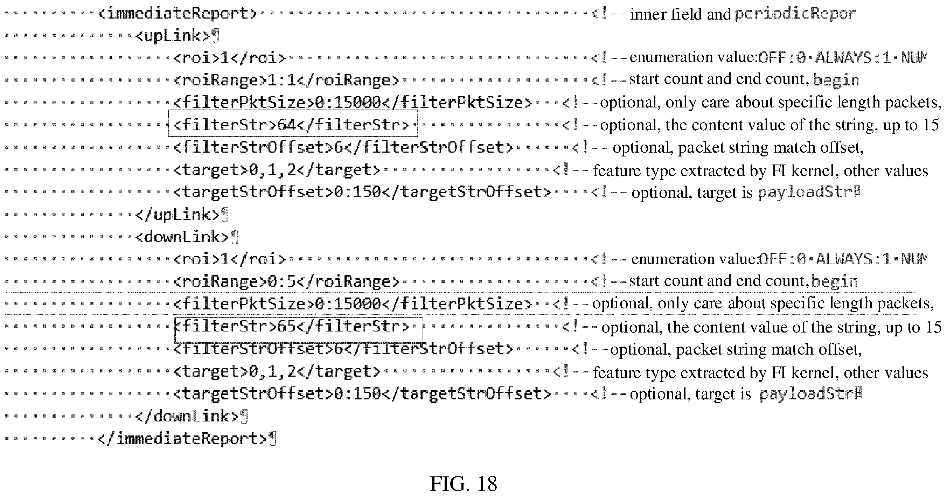

The foregoing flow model may be configured to the traffic reporting component through a configuration file, and the configuration file may be carried in the traffic reporting request sent by the traffic sensing component in step 1206. The flow model records feature information that the packet needs to match. For example, as shown in FIG. 18, the foregoing heartbeat flow packet may have feature information in the sixth byte of the packet payload. For example, feature information in the uplink heartbeat flow packet is 0x64, and feature information in the downlink heartbeat flow packet is 0x65. In this case, a matching feature filterStr may be preset in the flow model, 0x64 is matched in the uplink flow, and 0x65 is matched in the downlink flow, where the matching position is 6 bytes offset from the UDP payload.

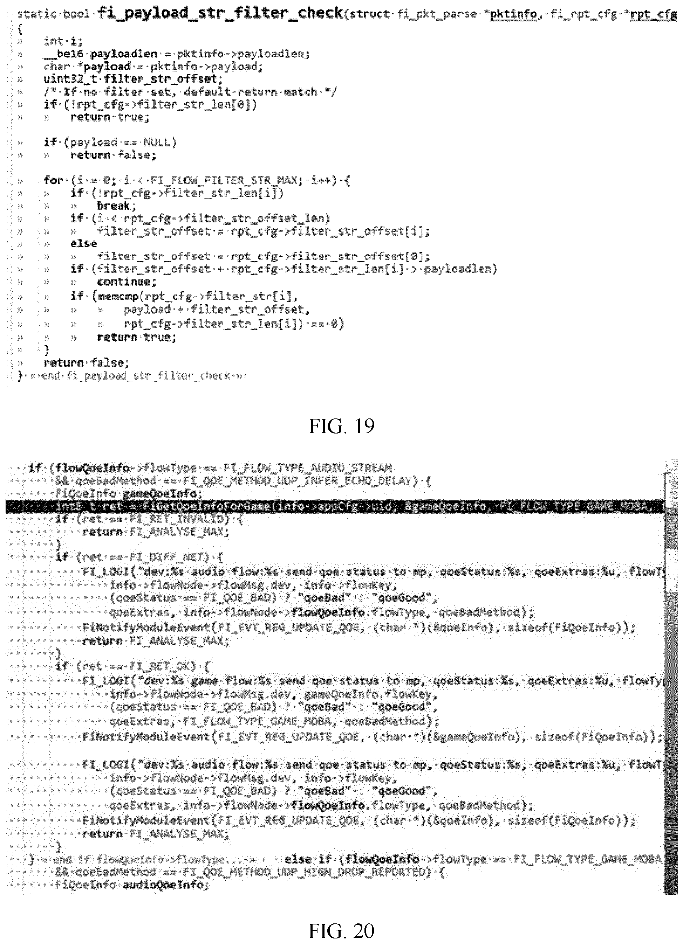

As shown in FIG. 19, the code logic may use memcmp to compare whether the packet content is consistent with the configured matching feature filterStr. The specific code is: if (memcmp(rpt_cfg->filter_str[i], payload + filter_str_offset, rpt_cfg->filter_str_len[i]) == 0), where memcmp compares and obtains a packet consistent with the matching feature filterStr, thereby filtering out the heartbeat flow packet of the target flow.

Step S3: Report a matched target flow and statistics information of the target flow according to a flow reporting policy.

Specifically, the filtered packets of the target flow may be stored in the SKB queue, and reported periodically or immediately according to the reporting policy of the target flow.

If the packets are reported periodically, part or some of the packets received by the target flow in this period (for example, the last packet of the target flow received in this period) may be reported to the traffic sensing component 133 at the end of each period. Optionally, the packet statistics information (for example, a quantity of packets, and a total quantity of bytes of the packets) of the target flow in the current period may be further reported to the traffic sensing component 133.

If the packets are reported immediately, the matched packets may be directly reported to the traffic sensing component.

Through the foregoing processing, the packet of the target flow may be accurately matched and filtered in the traffic reporting component, and the reported packet may be used in the traffic sensing component for network quality assessment.

Step 1402: The traffic sensing component 133 analyzes the packet reported by the traffic reporting component 141 to obtain a packet analysis result.

In this step, the traffic sensing component 133 may perform flow-level network quality assessment. For a network quality assessment parameter used in the network quality assessment of each target flow, reference may be made to the examples in Table 2. The network quality assessment parameter of each target flow may be delivered to the traffic sensing component 133 in step 1206.

In this step, the obtained packet analysis result may be a flow-level analysis result, for example, whether the quality of the target flow is good or poor.

For the implementation of the network quality assessment for each flow, reference may be made to the corresponding description in step 311, and details are not described herein again.

Step 1403: The traffic sensing component 133 sends the packet analysis result to the flow-level path management component 131.

Specifically, the foregoing packet analysis result may include: identification information of the target flow, and description information of whether the quality of the target flow is good or poor.

As shown in FIG. 20, taking the network application being a game application as an example, a possible code implementation of sending the target flow and the network quality assessment result of the target flow to the flow-level path management component 131 for multiflow path scheduling switching is shown.

Step 1404: The flow-level path management component 131 determines to perform channel switching according to the packet analysis result, and determines whether there is an alternate network channel. If so, step 1414 is performed; and if not, step 1405 is performed.

For the implementation of steps 1405 to 1413, reference may be made to steps 1304 to 1312, and details are not described herein again.

Step 1414: The flow-level path management component 131 sends the identification information of the target flow with poor quality and the path of the alternate network channel to the flow-level policy management component 132.

Specifically, when determining that quality of a target flow is poor according to a packet analysis result of each target flow, the flow-level path management component 131 may send identification information of the target flow with poor quality and the path of the alternate network channel to the flow-level policy management component 132.

Step 1415: The flow-level policy management component 132 sends a channel switching instruction to the policy execution component 142.

Specifically, after receiving the identification information of the target flow with poor quality and the path of the alternate network channel sent by the flow-level path management component 131, the flow-level policy management component 132 may determine a flow switching policy corresponding to the target flow with poor quality, determine a to-be-switched flow of the network application from flows carried on the same network channel as the target flow with poor quality according to the flow switching policy, and send the channel switching instruction to the policy execution component 142, where the channel switching instruction may be used for instructing the policy execution component 142 to switch the to-be-switched flow from the current primary network channel (for example, a primary network channel) to the alternate network channel (for example, a cellular channel), so that the channel switching can be completed faster, the delay caused by the channel switching can be reduced, and the user experience can be improved.

For example, as shown in FIG. 11a, flow A, flow B, and flow C of the network application are all carried on the Wi-Fi 1 channel, flow A is a target flow, and a flow switching policy corresponding to flow A is: flow A and flow B. In this case, if the network quality of flow A is poor, it may be determined that flow A and flow B of the network application are to-be-switched flows according to the flow switching policy corresponding to flow A. therefore, as shown in FIG. 11b, the flow-level policy management component 132 may cause the policy execution component 142 to switch flow A and flow B to the alternate network channel through the channel switching instruction, that is, the Mobile 1 channel in FIG. 11b. Continuing this example, it is assumed that the flow switching policy corresponding to flow A is: flow A, flow B, and flow C. In this case, if the network quality of flow A is poor, it may be determined that flow A, flow B, and flow C of the network application are to-be-switched flows according to the flow switching policy corresponding to flow A. therefore, as shown in FIG. 11c, the flow-level policy management component 132 may cause the policy execution component 142 to switch flow A, flow B, and flow C to the alternate network channel through the channel switching instruction, that is, the Mobile 1 channel in FIG. 11c.

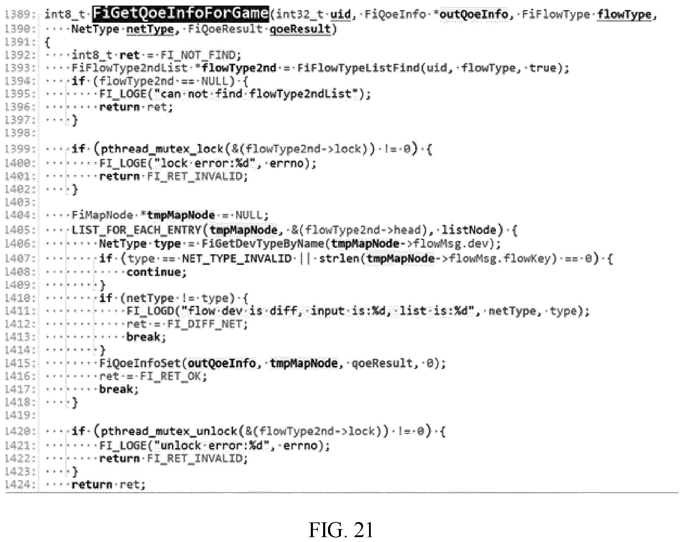

As shown in FIG. 21, taking the network application being a game application as an example, a possible code implementation of obtaining a to-be-switched flow in the network application by the flow-level policy management component 132 by traversing all flow types on the service.

Step 1416: The policy execution component 142 performs channel switching.

Specifically, after receiving the channel switching instruction sent by the flow-level policy management component 132, the policy execution component 142 may switch the plurality of to-be-switched flows of the network application from the current network channel to the alternate network channel. That is, other flows of the network application may continue to be carried and run on the current network channel, and the plurality of to-be-switched flows may be carried and run on the alternate network channel, so that the switching can be completed quickly, thereby ensuring the service quality and the user experience.

In the foregoing channel switching method shown in FIG. 12 to FIG. 14b, the flow-level channel switching scheduling is extended, and the scheduling of a single flow is extended to the scheduling of a plurality of flows. In some embodiments, a network quality assessment result of one flow of a network application can be quickly sensed, and the assessment result can be applied to a type of flow (for example, a delay-sensitive flow) of the network application, thereby reducing possibility of lag in service operation caused by this type of flow, and improving the user experience.

### Example:

there are heartbeat flow packets with a 1s period in a voice flow of Peace Elite. This voice flow may be used as a target flow of the game application. The traffic reporting component may detect a heartbeat flow packet of the voice flow. A network round-trip time of the voice flow may be calculated by the traffic sensing component according to the heartbeat flow packet of the voice flow, to assess the network quality of the voice flow. When the network quality becomes poor, the assessment result may be applied to all delay-sensitive flows in the whole game (for example, battle flows and voice flows), and network channel switching is performed on all delay-sensitive flows of the game.

By using the channel switching method of the embodiments of this application, it is not necessary to accurately obtain a packet of each flow in the network application and perform network quality assessment on each flow, which can reduce flows that the electronic device needs to monitor and assess, and reduce the data processing amount of the electronic device. Moreover, when the quality of the network channel becomes poor, the channel switching is performed on a plurality of flows (for example, a type of flows) in time, which reduces the possibility of lag in service operation caused by the poor network quality of the plurality of flows, thereby reducing the occurrence of lag in service operation, and improving the user experience.

An embodiment of this application further provides an electronic device, where the device includes a storage medium and a central processing unit, the storage medium may be a non-volatile storage medium, and a computer-executable program is stored in the storage medium. The central processing unit is connected to the non-volatile storage medium, and executes the computer-executable program to implement the method provided in any of the embodiments of FIG. 7 to FIG. 15 of this application.

An embodiment of this application further provides an electronic device, including: one or more processors; a memory; and one or more computer programs, where the one or more computer programs are stored in the memory, the one or more computer programs include instructions, and the instructions, when executed by the device, causes the device to perform the method provided in any of the embodiments of FIG. 7 to FIG. 15 of this application.

An embodiment of this application further provides a computer-readable storage medium, where the computer-readable storage medium stores a computer program, and the computer program, when run on a computer, causes the computer to perform the method provided in any of the embodiments of FIG. 7 to FIG. 15 of this application.

An embodiment of this application further provides a computer program product, where the computer program product includes a computer program, and the computer program, when run on a computer, causes the computer to perform the method provided in any of the embodiments of FIG. 7 to FIG. 15 of this application.

It may be understood that to implement the foregoing functions, the electronic device or the like includes hardware structures and/or software modules for performing the various corresponding functions. A person skilled in the art should be easily aware that, in combination with the units and algorithm steps of the examples described in the embodiments disclosed in this specification, the embodiments of this application can be implemented by hardware or a combination of hardware and computer software. Whether a function is implemented by hardware or computer software driving hardware depends on particular applications and design constraints of the technical solutions. A person skilled in the art may use different methods to implement the described functions for each particular application, but it should not be considered that the implementation goes beyond the scope of the embodiments of this application.

In the embodiments of this application, functional module division may be performed on the electronic device according to the examples of the methods. For example, various functional modules may be divided according to the corresponding functions, or two or more functions may be integrated into one processing module. The integrated module is implemented in the form of hardware, or is implemented in the form of a software functional module. It should be noted that, In this embodiment of this application, the module division is an example, and is merely logical function division, and there may be other division manners during actual application.

Through the descriptions of the foregoing implementations, a person skilled in the art may clearly understand that, for the purpose of convenient and brief description, only division of the foregoing functional modules is used as an example for description. In actual application, the foregoing functions may be allocated to and completed by different functional modules according to requirements. That is, an internal structure of an apparatus is divided into different functional modules to complete all or some of the functions described above. For specific work process of the system, apparatus and unit described above, corresponding process in the foregoing method embodiments may be referred to, and the details are not described herein again.

Functional units in the embodiments of this application can be integrated into one processing unit, or each of the units can exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the related art, or all or a part of the technical solutions may be implemented in the form of a software product. The computer software product is stored in a storage medium and includes several instructions for instructing a computer device (which may be a PC, a server or a network device) or a processor to perform all or some of the steps of the method described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A channel switching method, applied to an electronic device, wherein the electronic device comprises a first network channel and a second network channel, and the method comprises:
starting (301) a first network application, wherein the first network application comprises a first data flow, a second data flow and a third data flow, and the first data flow, the second data flow and the third data flow are carried on the first network channel; and
switching (315) the network channel carrying the first data flow and the second data flow to the second network channel in a case of detecting that network quality of the first data flow does not meet a preset condition and keeping the third data flow carried on the first network channel unchanged.

2. The method according to claim 1, wherein the first data flow and the second data flow are data flows that are sensitive to a same parameter, and the parameter comprises at least one of the following parameters: a delay, a packet loss rate, a rate, or a bandwidth.

3. The method according to claim 2, wherein the detecting that network quality of the first data flow does not meet a preset condition comprises:
detecting, according to the parameter to which the first data flow is sensitive, that the network quality of the first data flow does not meet the preset condition.

4. The method according to claim 3, wherein the detecting, according to the parameter to which the first data flow is sensitive, that the network quality of the first data flow does not meet the preset condition comprises:
obtaining a packet of the first data flow from packets carried on the first network channel;
calculating the parameter to which the first data flow is sensitive according to the obtained packet; and
determining that the calculated parameter does not meet the preset condition corresponding to the parameter.

5. The method according to claim 4, wherein the obtaining a packet of the first data flow from packets carried on the first network channel comprises:
obtaining the packets carried on the first network channel;
determining that identification information of the first network application exists in the packets; and
determining that the packets comprise a preset matching feature of the first data flow.

6. The method according to any one of claims 1 to 5, wherein before the switching the network channel carrying the first data flow and the second data flow to the second network channel, the method further comprises:
obtaining network channels in an available state in the electronic device except the first network channel in a case of detecting an environment change;
respectively performing quality assessment on the network channels in the available state;
selecting the second network channel with the best quality as an alternate network channel according to an assessment result of the quality assessment; and
enabling the alternate network channel.

7. The method according to claim 6, wherein the switching the network channel carrying the first data flow and the second data flow to the second network channel comprises:
switching, in a case of determining that there is a second network channel that is enabled and used as the alternate network channel, the network channel carrying the first data flow and the second data flow to the second network channel.

8. The method according to any one of claims 1 to 7, wherein the switching the network channel carrying the first data flow and the second data flow to the second network channel further comprises:
obtaining network channels in the available state in the electronic device except the first network channel in a case of determining that there is no enabled alternate network channel;
respectively performing quality assessment on the network channels in the available state;
selecting the second network channel with the best quality as an alternate network channel according to an assessment result of the quality assessment;
enabling the second network channel used as the alternate network channel; and
switching the network channel carrying the first data flow and the second data flow to the second network channel.

9. The method according to any one of claims 1 to 8, wherein before the detecting that network quality of the first data flow does not meet a preset condition, the method further comprises:
determining that the first network application is an application in a preset whitelist.

10. The method according to any one of claims 1 to 9, wherein the first network channel is a Wi-Fi channel or a cellular channel, and the second network channel is a Wi-Fi channel or a cellular channel.

11. The method according to any one of claims 1 to 10, wherein the first network application is a game application, the first data flow is a voice flow, and the second data flow is a battle flow; or
the first network application is a video playback application, the first data flow is a voice flow, and the second data flow is a video flow.

12. An electronic device, comprising: a processor; and a memory, wherein the memory is configured to store computer program code, the computer program code comprises instructions, and the electronic device, when reading the instructions from the memory, performs the method according to any one of claims 1 to 11.

13. A computer-readable storage medium, comprising computer instructions, wherein the computer instructions, when run on an electronic device, cause the electronic device to perform the method according to any one of claims 1 to 11.

## Patentansprüche

1. Ein Kanalumschaltverfahren, angewendet auf ein elektronisches Gerät, wobei das elektronische Gerät einen ersten Netzwerkkanal und einen zweiten Netzwerkkanal umfasst, und das Verfahren umfasst:
Starten (301) einer ersten Netzwerkapplikation, wobei die erste Netzwerkapplikation einen ersten Datenfluss, einen zweiten Datenfluss und einen dritten Datenfluss umfasst, und der erste Datenfluss, der zweite Datenfluss und der dritte Datenfluss auf dem ersten Netzwerkkanal übertragen werden; und
Umschalten (315) des Netzwerkkanals, der den ersten Datenfluss und den zweiten Datenfluss trägt, auf den zweiten Netzwerkkanal, falls festgestellt wird, dass die Netzwerkqualität des ersten Datenflusses eine vorgegebene Bedingung nicht erfüllt, und Beibehalten des dritten Datenflusses auf dem ersten Netzwerkkanal unverändert.

2. Das Verfahren nach Anspruch 1, wobei der erste Datenfluss und der zweite Datenfluss Datenflüsse sind, die empfindlich auf denselben Parameter reagieren, und der Parameter umfasst mindestens einen der folgenden Parameter: eine Verzögerung, eine Paketverlustrate, eine Rate oder eine Bandbreite.

3. Das Verfahren nach Anspruch 2, wobei das Feststellen, dass die Netzwerkqualität des ersten Datenflusses eine vorgegebene Bedingung nicht erfüllt, umfasst:
Feststellen, dass die Netzwerkqualität des ersten Datenflusses gemäß dem Parameter, auf den der erste Datenfluss empfindlich ist, die vorgegebene Bedingung nicht erfüllt.

4. Das Verfahren nach Anspruch 3, wobei das Feststellen, dass die Netzwerkqualität des ersten Datenflusses gemäß dem Parameter, auf den der erste Datenfluss empfindlich ist, die vorgegebene Bedingung nicht erfüllt, umfasst:
Abrufen eines Pakets des ersten Datenflusses aus den auf dem ersten Netzwerkkanal übertragenen Paketen;
Berechnen des Parameters, auf den der erste Datenfluss empfindlich ist, gemäß dem abgerufenen Paket; und
Feststellen, dass der berechnete Parameter die vorgegebene Bedingung, die dem Parameter entspricht, nicht erfüllt.

5. Das Verfahren nach Anspruch 4, wobei das Abrufen eines Pakets des ersten Datenflusses aus den auf dem ersten Netzwerkkanal übertragenen Paketen umfasst:
Abrufen der auf dem ersten Netzwerkkanal übertragenen Pakete;
Feststellen, dass Identifikationsinformationen der ersten Netzwerkapplikation in den Paketen vorhanden sind; und
Feststellen, dass die Pakete ein vorgegebenes Übereinstimmungsmerkmal des ersten Datenflusses umfassen.

6. Das Verfahren nach einem der Ansprüche 1 bis 5, wobei vor dem Umschalten des Netzwerkkanals, der den ersten Datenfluss und den zweiten Datenfluss trägt, auf den zweiten Netzwerkkanal, das Verfahren weiterhin umfasst:
Erhalten von Netzwerkkanälen in einem verfügbaren Zustand im elektronischen Gerät, mit Ausnahme des ersten Netzwerkkanals, im Falle der Erkennung einer Umweltänderung;
Jeweils Durchführung einer Qualitätsbewertung der Netzwerkkanäle im verfügbaren Zustand;
Auswahl des zweiten Netzwerkkanals mit der besten Qualität als alternativen Netzwerkkanal gemäß einem Bewertungsergebnis der Qualitätsbewertung; und
Aktivierung des alternativen Netzwerkkanals.

7. Das Verfahren nach Anspruch 6, wobei das Umschalten des Netzwerkkanals, der den ersten Datenfluss und den zweiten Datenfluss trägt, auf den zweiten Netzwerkkanal umfasst:
Umschalten des Netzwerkkanals, der den ersten Datenfluss und den zweiten Datenfluss trägt, auf den zweiten Netzwerkkanal, im Falle der Feststellung, dass ein zweiter Netzwerkkanal aktiviert und als alternativer Netzwerkkanal verwendet wird.

8. Das Verfahren nach einem der Ansprüche 1 bis 7, wobei das Umschalten des Netzwerkkanals, der den ersten Datenfluss und den zweiten Datenfluss trägt, auf den zweiten Netzwerkkanal ferner umfasst:
Erhalten von Netzwerkkanälen im verfügbaren Zustand im elektronischen Gerät, mit Ausnahme des ersten Netzwerkkanals, im Falle der Feststellung, dass kein aktivierter alternativer Netzwerkkanal vorhanden ist;
Jeweils Durchführung einer Qualitätsbewertung der Netzwerkkanäle im verfügbaren Zustand;
Auswahl des zweiten Netzwerkkanals mit der besten Qualität als alternativen Netzwerkkanal gemäß einem Bewertungsergebnis der Qualitätsbewertung;
Aktivierung des zweiten Netzwerkkanals, der als alternativer Netzwerkkanal verwendet wird; und
Umschalten des Netzwerkkanals, der den ersten Datenfluss und den zweiten Datenfluss trägt, auf den zweiten Netzwerkkanal.

9. Das Verfahren nach einem der Ansprüche 1 bis 8, wobei vor der Feststellung, dass die Netzwerkqualität des ersten Datenflusses eine voreingestellte Bedingung nicht erfüllt, das Verfahren ferner umfasst:
Feststellung, dass die erste Netzwerkapplikation eine Applikation in einer voreingestellten Whitelist ist.

10. Das Verfahren nach einem der Ansprüche 1 bis 9, wobei der erste Netzwerkkanal ein Wi-Fi-Kanal oder ein Mobilfunkkanal ist und der zweite Netzwerkkanal ein Wi-Fi-Kanal oder ein Mobilfunkkanal ist.

11. Das Verfahren nach einem der Ansprüche 1 bis 10, wobei die erste Netzwerkapplikation eine Spielapplikation ist, der erste Datenfluss ein Sprachfluss ist und der zweite Datenfluss ein Kampfstrom ist; oder
die erste Netzwerkapplikation eine Videowiedergabeapplikation ist, der erste Datenfluss ein Sprachfluss ist und der zweite Datenfluss ein Videostrom ist.

12. Eine elektronische Vorrichtung, umfassend: einen Prozessor; und einen Speicher, wobei der Speicher so konfiguriert ist, dass er Computerprogrammcodes speichert, die Computerprogrammcodes Anweisungen umfassen, und die elektronische Vorrichtung, wenn sie die Anweisungen aus dem Speicher liest, das Verfahren gemäß einem der Ansprüche 1 bis 11 ausführt.

13. Ein computerlesbares Speichermedium, umfassend Computeranweisungen, wobei die Computeranweisungen, wenn sie auf einer elektronischen Vorrichtung ausgeführt werden, die elektronische Vorrichtung veranlassen, das Verfahren gemäß einem der Ansprüche 1 bis 11 auszuführen.

## Revendications

1. Un procédé de commutation de canal, appliqué à un dispositif électronique, ledit dispositif électronique comprenant un premier canal réseau et un second canal réseau, et le procédé comprenant :
démarrer (301) une première application réseau, ladite première application réseau comprenant un premier flux de données, un second flux de données et un troisième flux de données, et le premier flux de données, le second flux de données et le troisième flux de données étant transportés sur le premier canal réseau ; et
commuter (315) le canal réseau transportant le premier flux de données et le second flux de données vers le second canal réseau dans le cas où il est détecté que la qualité du réseau du premier flux de données ne satisfait pas une condition prédéfinie, tout en maintenant le troisième flux de données transporté sur le premier canal réseau inchangé.

2. Le procédé selon la revendication 1, dans lequel le premier flux de données et le second flux de données sont des flux de données sensibles à un même paramètre, et le paramètre comprend au moins un des paramètres suivants : un délai, un taux de perte de paquets, un débit ou une bande passante.

3. Le procédé selon la revendication 2, dans lequel la détection que la qualité du réseau du premier flux de données ne satisfait pas une condition prédéfinie comprend :
détecter, selon le paramètre auquel le premier flux de données est sensible, que la qualité du réseau du premier flux de données ne satisfait pas la condition prédéfinie.

4. Le procédé selon la revendication 3, dans lequel la détection, selon le paramètre auquel le premier flux de données est sensible, que la qualité du réseau du premier flux de données ne satisfait pas la condition prédéfinie comprend :
obtenir un paquet du premier flux de données à partir des paquets transportés sur le premier canal réseau ;
calculer le paramètre auquel le premier flux de données est sensible selon le paquet obtenu ; et
déterminer que le paramètre calculé ne satisfait pas la condition prédéfinie correspondant au paramètre.

5. Le procédé selon la revendication 4, dans lequel l'obtention d'un paquet du premier flux de données à partir des paquets transportés sur le premier canal réseau comprend :
obtenir les paquets transportés sur le premier canal réseau ;
déterminer que des informations d'identification de la première application réseau existent dans les paquets ; et
déterminer que les paquets comprennent une caractéristique de correspondance prédéfinie du premier flux de données.

6. Le procédé selon l'une quelconque des revendications 1 à 5, dans lequel, avant de commuter le canal réseau transportant le premier flux de données et le second flux de données vers le second canal réseau, le procédé comprend en outre :
obtenir des canaux réseau dans un état disponible dans le dispositif électronique, à l'exception du premier canal réseau, en cas de détection d'un changement d'environnement ;
effectuer respectivement une évaluation de la qualité sur les canaux réseau dans l'état disponible ;
sélectionner le deuxième canal réseau avec la meilleure qualité comme canal réseau alternatif selon un résultat d'évaluation de la qualité ; et
activer le canal réseau alternatif.

7. Le procédé selon la revendication 6, dans lequel le basculement du canal réseau transportant le premier flux de données et le deuxième flux de données vers le deuxième canal réseau comprend :
basculement, en cas de détermination qu'il existe un deuxième canal réseau qui est activé et utilisé comme canal réseau alternatif, du canal réseau transportant le premier flux de données et le deuxième flux de données vers le deuxième canal réseau.

8. Le procédé selon l'une quelconque des revendications 1 à 7, dans lequel le basculement du canal réseau transportant le premier flux de données et le deuxième flux de données vers le deuxième canal réseau comprend en outre :
obtenir des canaux réseau dans l'état disponible dans le dispositif électronique, à l'exception du premier canal réseau, en cas de détermination qu'il n'existe pas de canal réseau alternatif activé ;
effectuer respectivement une évaluation de la qualité sur les canaux réseau dans l'état disponible ;
sélectionner le deuxième canal réseau avec la meilleure qualité comme canal réseau alternatif selon un résultat d'évaluation de la qualité ;
activer le deuxième canal réseau utilisé comme canal réseau alternatif ; et
basculement du canal réseau transportant le premier flux de données et le deuxième flux de données vers le deuxième canal réseau.

9. Le procédé selon l'une quelconque des revendications 1 à 8, dans lequel, avant la détection que la qualité du réseau du premier flux de données ne répond pas à une condition prédéfinie, le procédé comprend en outre :
déterminer que la première application réseau est une application dans une liste blanche prédéfinie.

10. Le procédé selon l'une quelconque des revendications 1 à 9, dans lequel le premier canal réseau est un canal Wi-Fi ou un canal cellulaire, et le deuxième canal réseau est un canal Wi-Fi ou un canal cellulaire.

11. Le procédé selon l'une quelconque des revendications 1 à 10, dans lequel la première application réseau est une application de jeu, le premier flux de données est un flux vocal, et le deuxième flux de données est un flux de bataille ; ou
la première application réseau est une application de lecture vidéo, le premier flux de données est un flux vocal, et le deuxième flux de données est un flux vidéo.

12. Un dispositif électronique, comprenant : un processeur ; et une mémoire, la mémoire étant configurée pour stocker un code de programme informatique, le code de programme informatique comprenant des instructions, et le dispositif électronique, lorsqu'il lit les instructions depuis la mémoire, exécute le procédé selon l'une quelconque des revendications 1 à 11.

13. Un support de stockage lisible par ordinateur, comprenant des instructions informatiques, les instructions informatiques, lorsqu'elles sont exécutées sur un dispositif électronique, amènent le dispositif électronique à exécuter le procédé selon l'une quelconque des revendications 1 à 11.
